# EUROPEAN PATENT APPLICATION

(11) **EP 4 779 810 A2**
(43) Date of publication of application: **22.07.2026**
(21) Application number: 26178615.6
(22) Date of filing: 01.08.2023
(51) Int. Cl.: H01R 12/79

(54) **CONNECTOR MODULE AND BATTERY MODULE INCLUDING THE SAME**

(30) Priority: 11.08.2022 KR 20220100974; 28.11.2022 KR 20220162090
(62) Divisional of application: 23852859.0
(71) Applicant: LG Energy Solution, Ltd., Seoul 07335 (KR)
(72) Inventor: LEE, Chang Hun, 34122 Daejeon (KR); LIM, Sang Muk, 15084 Gyeonggi-do (KR); JUNG, Sang Eun, 34122 Daejeon (KR); KIM, Beom Jun, 15084 Gyeonggi-do (KR)
(74) Representative: Goddar, Heinz J.

(57) **Abstract**

A connector module according to an embodiment of the present invention includes a first connector including a first connector housing that is recessed therein to define a first recessed portion and a first conductive part coupled to the first connector housing, and a second connector coupled to the first connector, wherein the second connector may include a second connector housing of which at least a portion is inserted into and coupled to the first recessed portion, a second conductive part inserted into and coupled to the second connector housing so as to be electrically connected to the first conductive part, and a coupling housing configured to pass through the second connector housing and the second conductive part so as to couple the second connector housing to the second conductive part.

## Description

### TECHNICAL FIELD

### CROSS-REFERENCE TO RELATED APPLICATION

The present application claims the benefit of the priority of Korean Patent Application Nos. 10-2022-0100974, filed on August 11, 2022, and 10-2022-0162090, filed on November 28, 2022, which are hereby incorporated by reference in their entirety.

### TECHNICAL FIELD

The present invention relates to a connector module and a battery module including the same.

### BACKGROUND ART

In order to solve the problem of environmental pollution caused by the use of petroleum resources and the problem of energy source shortage due to the depletion of petroleum resources, research and development on power generation based on eco-friendly energy sources are being conducted. Particularly, researches on secondary batteries capable of being repeatedly chargeable/dischargeable and thus highly usable are being actively conducted, and research on various aspects such as materials, structures, processes, and stability of secondary batteries are being conducted.

In terms of the structure of secondary batteries, research and development on miniaturization and integration of related structures are actively conducted to increase in energy density. Particularly, as the capacity of the batteries and the number of batteries mounted on the battery pack/battery module increase, an inner space of the battery pack/battery module becomes very narrow. Therefore, it is important to develop a structure that allows the batteries to be effectively electrically connected to the outside of the battery pack/battery module while disposing the batteries in a limited space.

According to the related art, internal components of the battery pack/battery module are coupled by soldering, but the soldering method has problems such as cracks occurring or deterioration in manufacturing yield In addition, according to the related art, when the internal components of the battery pack/battery module are miniaturized, there is possibility that damage due to mechanical vibration/impact or connection failure occurs.

### DISCLOSURE OF THE INVENTION

### TECHNICAL PROBLEM

An object of the present invention for solving the above problem is to provide a connector module of which a height is reduced to reduce an overall volume so as to occupy less space inside the battery module.

An object of the present invention for solving the above problem is to provide a connector module, which is capable of being easily mounted and detached in a limited space and preventing damage and defects due to mechanical vibration and impact, and a battery module including the connector module.

An object of the present invention for solving the above problem is to provide a connector module that increases in coupling force between components through tilting prevention and separation prevention structures to secure structural stability and a battery module including the connector module.

### TECHNICAL SOLUTION

A connector module according to an embodiment of the present invention includes a first connector including a first connector housing that is recessed therein to define a first recessed portion and a first conductive part coupled to the first connector housing, and a second connector coupled to the first connector, wherein the second connector may include a second connector housing of which at least a portion is inserted into and coupled to the first recessed portion, a second conductive part inserted into and coupled to the second connector housing so as to be electrically connected to the first conductive part, and a coupling housing configured to pass through the second connector housing and the second conductive part so as to couple the second connector housing to the second conductive part.

### ADVANTAGEOUS EFFECTS

The present invention may relate to the connector module and the battery module including the connector module. According to the preferred embodiment of the present invention the overall volume may be reduced to effectively utilize the inner space of the battery module.

According to the preferred embodiment of the present invention, the mounting and detaching of the connector even in the limited space may be easy due to the miniaturization.

According to the preferred embodiment of the present invention, the damage and defects of the connector module and the battery module due to the mechanical vibration and impact may be prevented.

According to the preferred embodiment of the present invention, the coupling force between the components of the connector module and the battery module may increase through the tilting prevention and separation prevention structures.

In addition, the effects that are obvious to those skilled in the art may be predicted from the configurations according to the embodiment of the present invention.

### BRIEF DESCRIPTION OF THE DRAWINGS

FIG. 1 is a perspective view of a battery module according to an embodiment of the present invention.
FIG. 2 is a plan view illustrating a configuration of the battery module when viewed from the above according to an embodiment of the present invention.
FIG. 3 is a perspective view illustrating a configuration in which an upper case is omitted from the battery module according to an embodiment of the present invention.
FIG. 4 is a partial enlarged view illustrating a configuration in which the connector module is mounted on a control unit in the battery module according to an embodiment of the present invention.
FIG. 5 is an exploded perspective view of the connector module according to an embodiment of the present invention.
FIG. 6 is a longitudinal cross-sectional view illustrating a configuration in which the connector module is mounted on the control unit according to an embodiment of the present invention.
FIG. 7 is a longitudinal cross-sectional view of a control unit cover according to an embodiment of the present invention.
FIG. 8 is a perspective view illustrating an arrangement of a conductive part according to an embodiment of the present invention.
FIG. 9 is a perspective view illustrating a configuration of a first connector when viewed in one direction according to an embodiment of the present invention.
FIG. 10 is a perspective view illustrating a configuration of the first connector when viewed in a different direction according to an embodiment of the present invention.
FIG. 11 is a perspective view illustrating a recessed line according to an embodiment of the present invention.
FIG. 12 is a perspective view illustrating a combtooth structure of a second connector according to an embodiment of the present invention.
FIG. 13a is a bottom surface illustrating the combtooth structure of the second connector according to an embodiment of the present invention.
FIG. 13b is a perspective view of the second connector when viewed from the below according to an embodiment of the present invention.
FIG. 14 is a plan view illustrating a state in which the first connector and the second connector are coupled to each other according to an embodiment of the present invention.
FIG. 15 is a longitudinal cross-sectional view taken along line B-B in the state in which the first connector and the second connector are coupled to each other according to an embodiment of the present invention.
FIG. 16 is a longitudinal cross-sectional view taken along line C-C in the state in which the first connector and the second connector are coupled to each other according to an embodiment of the present invention.
FIG. 17 is a plan view illustrating a configuration of the first connector when viewed from the above according to an embodiment of the present invention.
FIG. 18 is a longitudinal cross-sectional view of the first connector according to an embodiment of the present invention.
FIG. 19 is a plan view illustrating a protrusion rib of the first connector according to an embodiment of the present invention.
FIG. 20 is a plan view illustrating a hole of the first connector according to an embodiment of the present invention.
FIG. 21 is a perspective view of an internal rib according to an embodiment of the present invention.
FIG. 22 is a front view illustrating the internal rib according to an embodiment of the present invention.
FIG. 23 is a front view illustrating an arrangement of the protrusion rib and the internal rib according to an embodiment of the present invention.
FIG. 24 is a perspective view of the second connector according to an embodiment of the present invention.
FIG. 25 is an enlarged view of the second connector according to an embodiment of the present invention.
FIG. 26 is a front view of a coupling housing according to an embodiment of the present invention.
FIG. 27 is an enlarged view of a connection part and a coupling housing according to an embodiment of the present invention.
FIG. 28 is a perspective view illustrating a configuration in which a second conductive part is inserted into a second connector housing according to an embodiment of the present invention.
FIG. 29 is a perspective view illustrating a configuration in which the coupling housing is coupled to the second connector housing and the second conductive part according to an embodiment of the present invention.
FIG. 30 is a cross-sectional view of a connector module according to an embodiment of the present invention.
FIG. 31 is an enlarged view illustrating an inside of the connector module according to an embodiment of the present invention.
FIG. 32 is a cross-sectional view illustrating the inside of the connector module according to an embodiment of the present invention.
FIG. 33 is a schematic view illustrating a state in which vision inspection is performed on the connector module using a vision inspection device according to an embodiment of the present invention.
FIG. 34 is a flowchart illustrating a flow of performing the vision inspection according to an embodiment of the present invention.
FIG. 35 is a perspective view of the connector module that is subject to the vision inspection in a connector inspection method according to an embodiment of the present invention.
FIG. 36 is a plan view of reference lines according to an embodiment of the present invention.
FIG. 37 is a plan view of reference lines according to an embodiment of the present invention.
FIG. 38 is a plan view of reference lines according to an embodiment of the present invention.
FIG. 39 is a plan view of reference lines according to an embodiment of the present invention.
FIG. 40 is a plan view of reference lines according to an embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### [Theme 1]

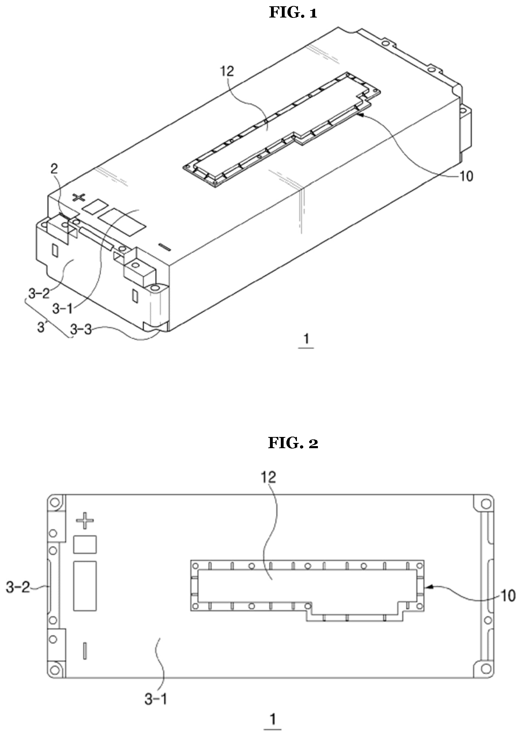

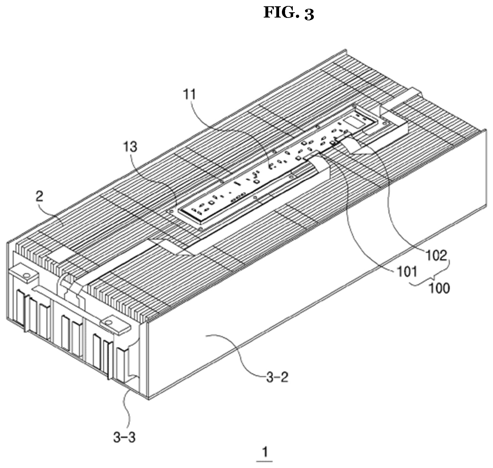

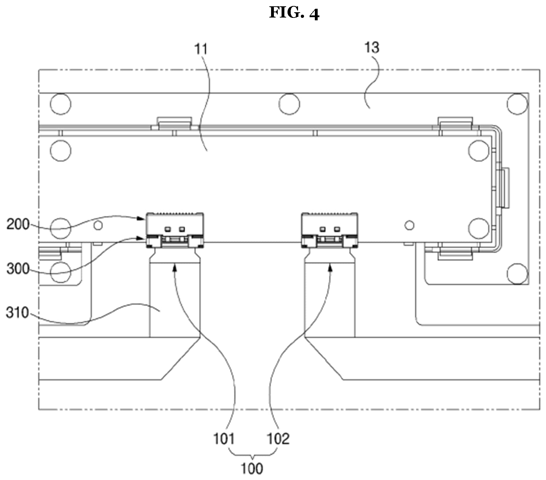

FIG. 1 is a perspective view of a battery module 1 according to an embodiment of the present invention, FIG. 2 is a plan view illustrating a configuration of the battery module 1 when viewed from the above according to an embodiment of the present invention, FIG. 3 is a perspective view illustrating a configuration in which an upper case 3-1 is omitted from the battery module 1 according to an embodiment of the present invention, and FIG. 4 is a partial enlarged view illustrating a configuration in which the connector module 100 is mounted on a control unit 10 in the battery module 1 according to an embodiment of the present invention.

### <Structure of battery module 1>

When described with reference to FIG. 1, the battery module 1 may include a plurality of batteries (e.g., a plurality of batteries 2 in FIG. 3). For example, the plurality of batteries 2 may be secondary batteries that are capable of being repeatedly charged and discharged. The plurality of batteries 2 may be arranged regularly in a predetermined pattern, but is not limited thereto. The plurality of batteries 2 may be electrically connected to the outside of the battery module 1.

The battery module 1 may include a battery case 3. For example, the battery case 3 may be provided to surround a plurality of batteries 2. The battery case 2 may define a portion of an exterior of the battery module 1.

The battery case 3 may include an upper case 3-1, a side case 3-2, and a lower case 3-3. For example, the upper case 3-1 may define an upper portion of the battery module 1 while covering upper portions of the plurality of batteries 2. The side case 3-2 may define a side portion of the battery module 1 while covering lateral sides of the plurality of batteries 2. The lower case 3-3 may define a lower portion of the battery module 1 while covering lower sides of the plurality of batteries 2.

At least two of the upper case 3-1, the side case 3-2, and the lower case 3-3 may be provided to be integrated with each other.

For example, when the upper case 3-1 and the lower case 3-3 are integrated with each other, the plurality of batteries 2 may be disposed inside the battery case 3 except for the side case 3-2 and then assembled with the side case 3-2.

For example, when the upper case 3-1 and the side case 3-2 are integrated with each other, the plurality of batteries 2 may be disposed inside the battery case 3 except for the lower case 3-3 and then be assembled with the lower case 3-3.

The battery module 1 may include a control unit 10. For example, the control unit 10 may be mounted on the battery case 3. Specifically, for example, the control unit 10 may be mounted on the upper case 3-1. The control unit 10 may be provided to enable wireless communication with an external control device.

The battery module 1 may include a connector module 100 (see FIG. 3). For example, the connector module 100 may electrically connect the control unit 10 to the plurality of batteries 2. In addition, the connector module 100 may be mounted on and detachable from the control unit 10.

The control unit 10 may include a control PCB 11. For example, the control PCB 11 may be electrically connected to the plurality of batteries 2 through the connector module 100. The control PCB 11 may be provided to enable wireless communication with the external control device. The control PCB 11 may be attached to the battery case 3 (or upper case 3-1). The mounting on the upper portion may be advantageous for the wireless communication.

The control PCB 11 may be mounted on a PCB frame 13. For example, the PCB frame 13 may be a frame for seating the control PCB 11. The control PCB 11 may be mounted on the upper case 3-1 through the PCB frame 13. Specifically, the control PCB 11 may be mounted on the PCB frame 13, and the PCB frame 13 may be mounted on the upper case 3-1. In other words, the PCB frame 13 may be disposed on a PCB mounting area that is concave or recessed in the upper case 3-1. In this case, the PCB frame 13 may be viewed from the outside in a state in which a control unit cover 12 is not mounted. However, it may not be limited thereto.

The control unit 10 may include the control unit cover 12. For example, the control unit cover 12 may cover the control PCB 11. The control unit cover 12 may be attached to the battery case 3 (or upper case 3-1). The control unit cover 12 may cover an upper side of the control PCB 11 to protect the control PCB 11 from an impact outside the control unit 10.

When described with reference to FIG. 2, the control unit 10 may be provided on the upper case 3-1 of the battery case 3. An area on which the control unit 10 is mounted may have a surface area less than 20% of that of the upper case 3-1. For example, if a surface area of the area of the upper case 3-1 is 125288mm^2, a surface area of the area on which the control unit 10 is mounted may be 22752mm^2. In this case, the surface area of the area on which the control unit 10 is mounted may be about 18% of that of the area of the upper case 3-1. However, the above-described numbers are examples and may not be limited thereto. Since the area on which the control unit 10 is mounted has a surface area less than 20% of that of the area of the upper case 3-1, a limited space may be effectively utilized.

When described with reference to FIGS. 3 and 4, the connector module 100 may be mounted on the control PCB 11. For example, the connector module 100 may be mounted on the control PCB 11. The connector module 100 may be mounted on the control PCB 11 so as to be disposed in the space between the control PCB 11 and the control unit cover 12. However, it may not be limited thereto.

The connector module 100 may include a plurality of connector modules (e.g., reference numerals 101 and 102). For example, the connector module 100 may include a first connector module 101. The first connector module 101 may extend toward one side of the battery case 3 and may be connected to a first electrode of the plurality of batteries 2. The connector module 100 may include a second connector module 102. The second connector module 102 may extend toward the other side of the battery case 3 and may be connected to a second electrode having a polarity different from that of the first electrode of the plurality of batteries 2. Since the connector module 100 includes the plurality of connector modules 101 and 102, the connector modules 100 may be effectively connected to the electrodes having different polarities of the plurality of batteries 2. However, it is not limited thereto, the connector module 100 may be provided as a single module. For example, one connector module 100 may extend toward the other side of the battery case 3 and be connected to the electrodes having the different polarities of the plurality of batteries 2.

The first connector module 101 and the second connector module 102 may be spaced apart from each other. For example, each of the first connector module 101 and the second connector module 102 may be mounted on the control PCB 11, and the first connector module 101 and the second connector module 102 may be spaced a predetermined distance from each other. The structure in which the first connector module 101 and the second connector module 102 are spaced a predetermined distance from each other is not particularly limited thereto. In other words, a range in which the first connector module 101 and the second connector module 102 are capable of being mounted to be spaced apart from each other on the control PCB 11 may be a range in which the first connector module 101 and the second connector module 102 do not overlap each other so as not to cause mis-assembly. However, the above-described numerical range may an example and may not be limited thereto.

The first connector module 101 and the second connector module 102 may extend in opposite directions, respectively. For example, each of the first connector module 101 and the second connector module 102 may include a conductive part, and the conductive parts may be connected to the electrodes having different polarities, respectively. Each of the conductive parts may correspond to the second conductive part 310, which will be described later. The first connector module 101 and the second connector module 102 may be disposed to be spaced apart from each other to effectively reduce a length of the conductive parts (e.g., the second conductive part 310) to be described, which extend to the electrical connection in proportion to the spaced degree. As described above, although the conductive parts are described as being provided in the connector module, the conductive parts may be FFCs connected to the connector module and may be explained and understood as a separate configuration.

The connector module 100 may include a first connector 200 and a second connector 300. For example, the first connector 200 may be mounted (or coupled) to be electrically connected to the control unit 10 (or control PCB 11). The second connector 300 may be mounted on and detachable from the first connector 200. For example, the second connector 300 may be hooked (or hung) to the first connector 200. When the connector module 100 includes the plurality of connector modules 101 and 102, each of the plurality of connector modules 101 and 102 may include the first connector 200 and the second connector 300.

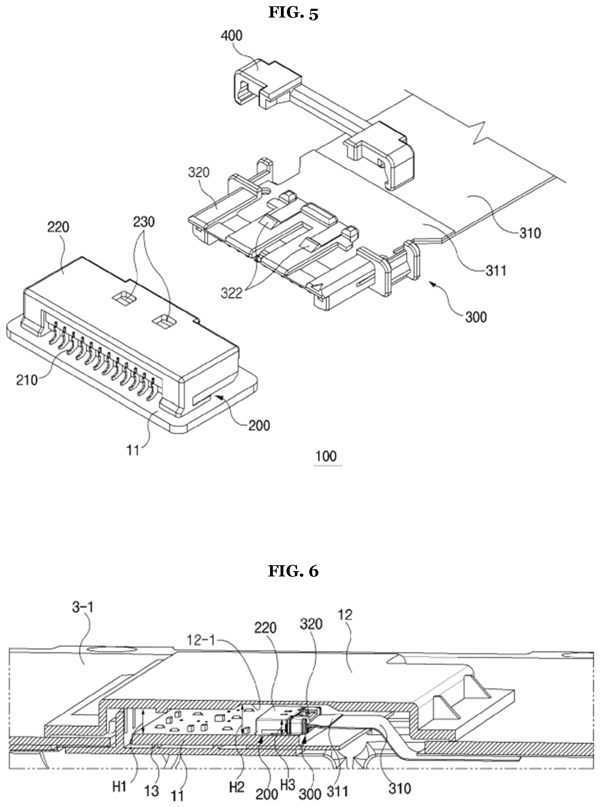

FIG. 5 is an exploded perspective view of the connector module 100 according to an embodiment of the present invention. The description of the foregoing embodiments may be equally or similarly applied to this embodiment.

### <Structure of battery module 100>

The connector module 100 may be provided by mounting the second connector 300 on the first connector 200. Since the second connector 300 is mounted on the first connector 200, the control PCB 11 and the plurality of batteries 2 may be electrically connected to each other.

Referring to FIG. 5, the first connector 200 may include a first conductive part 210. For example, the first conductive part 210 may be electrically connected to the control unit 10. Specifically, the first conductive part 210 may be electrically connected to the control PCB 11.

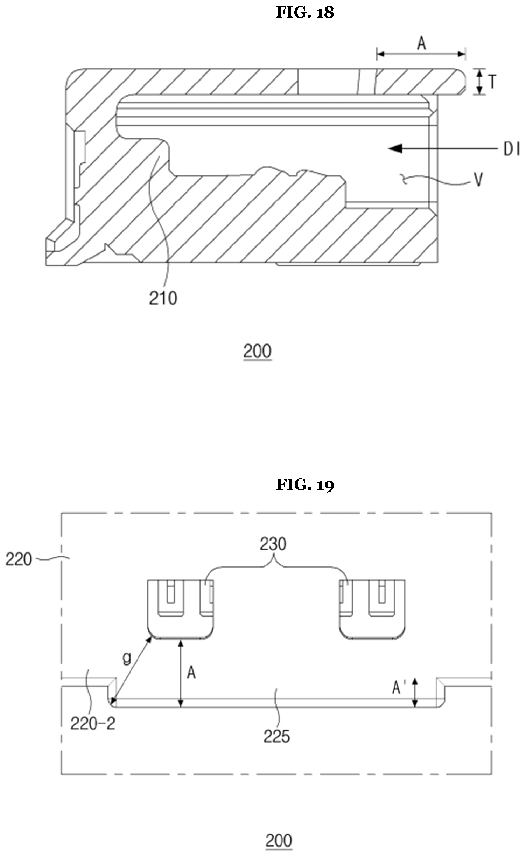

The first connector 200 may include a first connector housing 220. For example, the first connector housing 220 may define an exterior of the first connector 200. An insertion space V into which the second connector 300 may be defined in the first connector housing 220 so that the second connector 300 is inserted (see FIG. 18, etc.).

A hole 230 may be defined in the first connector 200. For example, the hole 230 may be defined in the first connector housing 220 to allow a portion of the second connector 300 (or a connection part 322 to be described later) to be hooked. A plurality of holes 230 may be defined.

The second connector 300 may include a second conductive part 310. For example, the second conductive part 310 may extend to a predetermined length to be electrically connected to the plurality of batteries 2. The second conductive part 310 may include a portion that is folded during the extension. For another example, the second conductive part 310 may be a flat flexible cable (FFC).

As described above, although the second conductive part 310 is described as being provided in the second connector 300, the second conductive part 310 may be an FFC connected to the second connector 300 and may be explained and understood as a separate configuration.

The second connector 300 may include a conductive film 311. For example, the conductive film 311 may be disposed on the second conductive part 310. Specifically, the conductive film 311 may be disposed between the second conductive part 310 and the second connector housing 320.

As described above, the conductive film 311 is described as being provided in the second connector 300, the conductive film 311 may be explained and understood as a separate configuration.

The second connector 300 may include a second connector housing 320. For example, the second connector housing 320 may define an exterior of the second connector 300. The second connector housing 320 may be inserted into the insertion space V inside the first connector housing 220.

The second connector 300 may include the connection part 322. The connection part 322 may be provided to be rotatable to a predetermined degree in the second connector housing 320. For example, in the process of inserting the connection part 322 into the first connector 200, the connection part 322 may be able to rotate in a direction toward or away from the second connector housing 320. In other words, in the process of inserting the connection part 322 into the first connector 200, the connection part 322 may rotate to include a section in which a height difference occurs at a distal end of the connection part 322. The connection part 322 (or the distal end of the connection part 322) may pass through the hole 230 of the first connector 200 and then be connected to the first connector housing 220 to connect the first connector 200 to the first connector 200.

The connector module 100 may include a coupling housing 400. The coupling housing 400 may restrict the movement of the second conductive part 310 with respect to the second connector housing 320. The coupling housing 400 may stably maintain electrical contact between the first conductive part 210 and the second conductive part 310 by restricting the movement of the second conductive part 310.

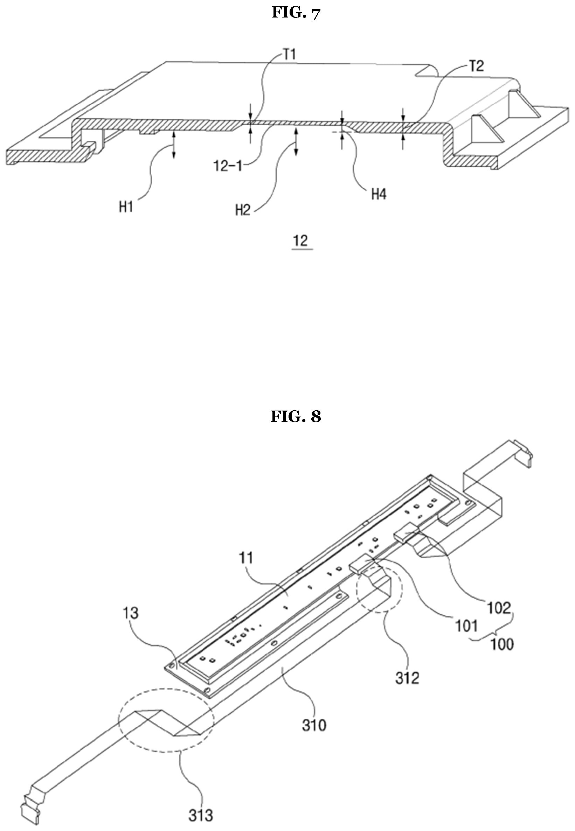

FIG. 6 is a longitudinal cross-sectional view illustrating a configuration in which the connector module 100 is mounted on the control unit according to an embodiment of the present invention, and FIG. 7 is a longitudinal cross-sectional view of the control unit cover 12 according to an embodiment of the present invention. The description of the foregoing embodiments may be equally or similarly applied to this embodiment. Hereinafter, it will be described with reference to FIGS. 6 and 7.

### <Structure of control unit 10>

The control PCB 11 may be disposed on the PCB frame 13 disposed in a PCB mounting area provided to be concave or recessed in the upper case 3-1. The control PCB 11 may include an area on which the connector module 100 is disposed and an area on which the connector module 100 is not disposed. The area on which the connector module 100 is not disposed may be an area of the control PCB 11 other than the area on which the connector module 100 is disposed.

The control unit cover 12 may define an accommodation space in which the connector module 100 is accommodated. For example, the control unit cover 12 may be disposed to cover the control PCB 11 in the battery case 3 (or upper case 3-1), thereby defining the accommodation space for accommodating the connector module 100. For another example, the control unit cover 12 may be mounted on the battery case 3 (or the upper case 3-1) to cover the upper portion of the connector module 100.

In the area on which the connector module 100 is not disposed, a height H1 from the control PCB 11 to the control unit cover 12 may be less than 4 mm (e.g., 3.92 mm).

The control unit cover 12 may include a cover recess part 12-1. An area of the control unit cover 12 facing the connector module 100 may be recessed by a predetermined degree to define the cover recess part 12-1. Specifically, for example, in the area on which the connector module 100 is disposed, a height from the control PCB 11 to the control unit cover 12 (or a height H2 of the cover recess part 12-1) may be 5 mm or less.

In the areas of the cover recess part 12-1, an area facing the connector module 100 may include a curved area. For example, the area facing the connector module 100 may be provided as a gently inclined area, and thus, damage of each of the connector module 100 and the control unit cover 12 may be minimized even when each of the connector module 100 and the control unit cover 12 collides or in contact with the connector module 100.

A predetermined recessed degree (or height) H4 of the cover recess part 12-1 may be 2/3 or more of a thickness of a remaining portion that is not recessed. For example, a thickness of the cover recess part 12-1 of the control unit cover 12 may be 0.5 mm, and a thickness of the remaining portion may be 1.5 mm.

The thickness of the cover recess part 12-1 may be 40% or less of the thickness of the remaining portion. For example, a thickness of the cover recess part 12-1 of the control unit cover 12 may be 0.5 mm, and a thickness of the remaining portion may be 1.5 mm.

### In this case, the predetermined recessed degree H4 may be 1 mm.

A height H3 of the connector module 100 may be less than the height H2 of the cover recess part 12-1. For example, when the height H2 of the cover recess part 12-1 is 5 mm or less, the connector module 100 may have a height of 4 mm or less. For example, the height H2 of the cover recess part 12-1 may be 4.92 mm, and the height H3 of the connector module 100 may be 3.9 mm. However, the above-described numerical range may an example and may not be limited thereto.

A distance from the control PCB 11 to the control unit cover 12 may range of 3.9 mm to 5 mm. For example, the distance from any area of the control PCB 11 to the control unit cover 12 may range of 3.9 mm to 5 mm. Specifically, for example, in the area of the control PCB 11 on which the connector module 100 is disposed, the distance between the control PCB 11 and the control unit cover 12 may be 4.92 mm. In addition, in the remaining area of the control PCB 11, a distance between the control PCB 11 and the control unit cover 12 may be 3.92 mm. However, the above-described numerical range may be an example with an error range of 0.05 mm and may not be limited thereto.

As described above, the cover recess part 12-1 may be provided in the control unit cover 12 to prevent the control unit cover 12 itself from increasing in height due to the connector module 100, thereby effectively miniaturizing the control unit cover 12. In addition, the thickness of the remaining area of the control unit cover 12 on which the cover recess part 12-1 is not formed may be thicker than the cover recess part 12-1 to effectively reinforce an overall rigidity of the control unit cover 12.

FIG. 8 is a perspective view illustrating an arrangement of the conductive part 310 according to an embodiment of the present invention. The description of the foregoing embodiments may be equally or similarly applied to this embodiment.

### <Structure of conductive part 310>

The second connector 300 may include a second conductive part 310. Although the second conductive part 310 is described as being provided in the second connector 300, the second conductive part 310 may be an FFC connected to the second connector 300 and may be explained and understood as a separate configuration.

The second conductive part 310 may be electrically connected to the plurality of batteries 2. For example, the second conductive part 310 may extend to a predetermined length to be electrically connected to the plurality of batteries 2. The predetermined length may be a length that extends from the second connector housing 320 to one side (or the other side) of the battery case 3 and may be electrically connected to the plurality of batteries 2.

The second conductive part 310 may include portions 312 and 313 that are folded during the extension. For example, the second conductive part 310 may include a first folded portion 312 and a second folded portion 313 during the extension. Specifically, the second conductive part 310 may be an FFC, and the electrical connection may be maintained even when folded. Thus, the second conductive part 310 may be folded during the extension, and thus, spatial efficiency may be maximized and be effectively connected to the plurality of batteries 2. In addition, a path of the electrical connection may be effectively implemented by structurally adaptively designing and implementing the folding of the second conductive part 310 into various paths.

A flexible flat cable (FFC) may be a cable (e.g., a strip-shaped cable) that is connected through the connector housing, and a flexible printed circuit (FPC) may be a printed circuit using a printing method, and thus, the FFC may be greater than the FPC. However, as the above-described embodiment, the connector module 100 may be provided to a height of 4 mm or less to maximize the spatial efficiency.

### [Theme 2]

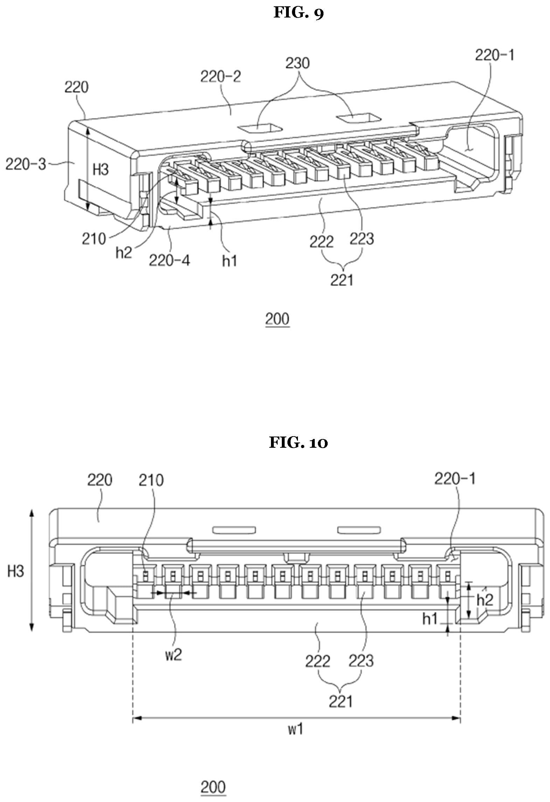

FIG. 9 is a perspective view illustrating a configuration of the first connector 200 when viewed in one direction according to an embodiment of the present invention, and FIG. 10 is a perspective view illustrating a configuration of the first connector 200 when viewed in a different direction according to an embodiment of the present invention. The description of the foregoing embodiments may be equally or similarly applied to this embodiment. Hereinafter, description will be made with reference to FIGS. 9 and 10.

### <Reinforcing structure of first connector 200>

The first connector 200 may include a protrusion 221. For example, the protrusion 221 may be provided to protrude from an inner bottom surface of the first connector housing 220. In addition, the first conductive part 210 may be mounted on the protrusion 221.

The protrusion 221 may include a body portion 222. For example, the body portion 222 may protrude from the inner bottom surface of the first connector housing 220 to a first height h1. Specifically, for example, when the height H3 of the first connector 200 is 3.5 mm to 4 mm, the first height h1 may range of 0.4 mm to 0.6 mm.

The protrusion 221 may include partition walls 223. For example, the partition walls 223 may be provided to protrude from the body portion 222. The partition walls 223 may protrude from the inner bottom surface to a second height h2 that is higher than the first height h1. The partition walls 223 may protrude from the body portion 222 in the form of a plurality of partition walls. The body portion 222 may be provided to include an area on which the partition walls 223 are disposed when viewed from the above and may extend toward an opening 220-1.

The first conductive part 210 may be provided in plurality in a direction crossing a direction DI in which the second connector 300 is inserted. For example, the first conductive part 210 may be provided in the form of a plurality of connection terminals and may be disposed in a plurality in the crossing direction. For another example, the first conductive part 210 may have a plurality of connection terminals arranged alternately with the partition walls 223. The alternating arrangement may be used to prevent short circuit from occurring in the connection terminals.

The body portion 222 may extend parallel to the direction in which the first conductive part 210 is disposed. For example, a length w1 of the body portion 222 in the direction crossing the direction DI in which the second connector 300 is inserted may range of 10 mm to 13 mm. A width w2 of each of the partition walls 223 may range of 0.5 mm to 0.7 mm. Each of the partition walls 223 may include a plastic material (e.g., engineering plastic). For example, each of the partition walls 223 may be PA9T, but is not limited thereto. When each of the partition walls 223 is made of the above-described plastic material, the partition walls 223 may have long-term heat resistance at a high temperatures, have strong durability against various chemicals, and have general effects of mechanical properties obtained by the engineering plastics.

The protrusion 221 including the body portion 222 and partition walls 223, which are provided as reinforcing structures, may be provided on the first connector 200. Thus, when the second connector 300 is inserted, the partition walls 223 may be effectively prevented from being damaged or destroyed due to direct collision or interference with the second connector housing 320. Since the body portion 222 has a structure that is filled into a lower space of each of the partition walls 223, strength of the partition walls may be supplemented, and thus, the partition walls may be firmly maintained in their shape without being easily damaged.

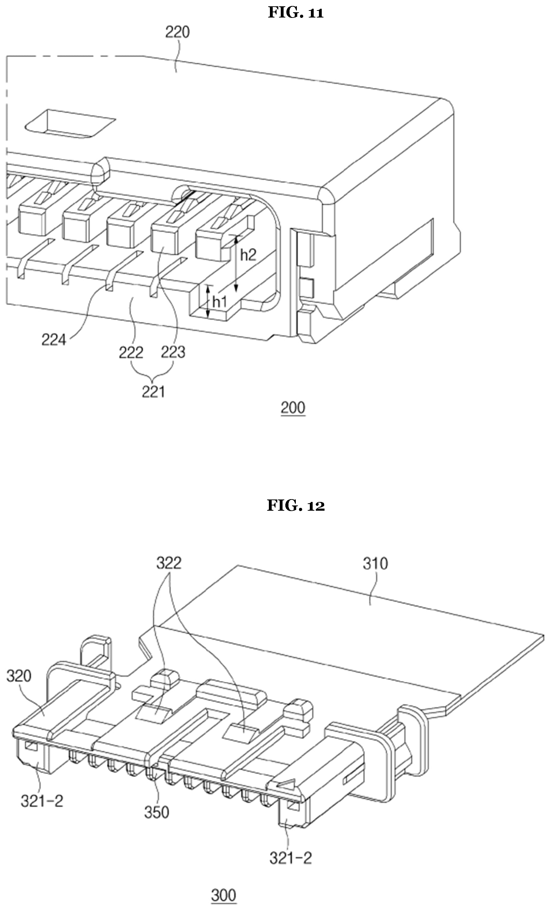

FIG. 11 is a perspective view illustrating a recessed line 224 according to an embodiment of the present invention. The description of the foregoing embodiments may be equally or similarly applied to this embodiment.

### <Recessed line 224>

The body portion 222 may include the recessed line 224. For example, the recessed line 224 may be provided by be recessed in the body portion 222.

The recessed lines 224 may be disposed alternately with the partition walls 223. For a specific example, when viewed from an opening 220-1, the recessed line 224 may be disposed alternately between the partition walls 223.

The recessed line 224 may be spaced apart from the partition walls 223 to extend toward the opening 220-1. For example, the recessed line 224 may be spaced apart from the partition walls 223 in a direction parallel to the direction in which the second connector 300 is inserted, and the second connector 300 may extend toward the opening 220-1 in a direction parallel to the direction in which the second connector 300 is inserted.

The recessed line 224 may be provided to guide the combtooth structure 350, which will be described later. For example, the recessed line 224 may have a shape corresponding to the combtooth structure 350. The recessed line 224 may be provided to be recessed in the body portion 222 so that the combtooth structure 350 is guided when inserted.

Since the body portion 222 is provided with the recessed line 224, when the second connector 300 is inserted into the first connector 200, the combtooth structure 350 may not be deviated from an insertion path to effectively prevent the partition walls 223 from being damaged or destroyed due to the direction collision or interference with the second connector housing 320.

When the combtooth structure 350 is inserted into the partitions 223, the recessed line 224 may be provided so that a portion of the combtooth structure 350 is mounted thereon. For example, when the distal end of the combtooth structure 350 is inserted and mounted between the partition walls 223, the portion of the combtooth structure 350 at a side of the combtooth base portion 360 may be mounted on the recessed line 224. The portion of the combtooth structure 350 may be mounted on the recessed line 224 to prevent the first connector 200 and the second connector 300 from being additionally shaken due to the vibration and impact when the first connector 200 and the second connector 300 are coupled to each other, thereby stably maintaining the electrical connection therebetween.

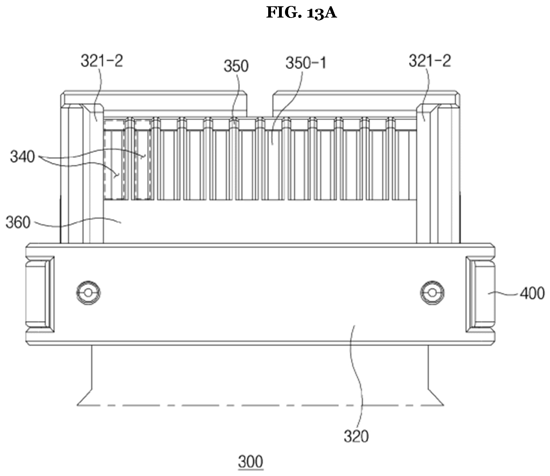

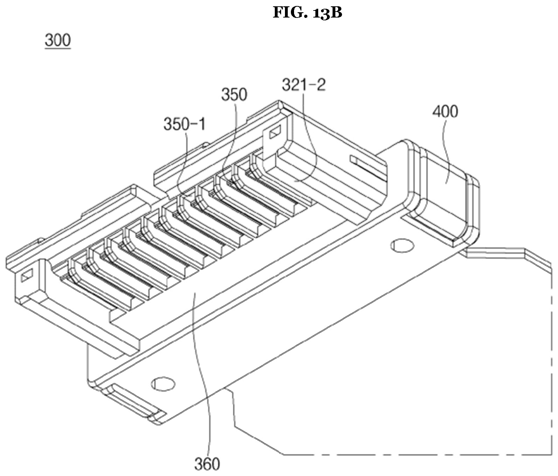

FIG. 12 is a perspective view illustrating the combtooth structure 350 of the second connector 300 according to an embodiment of the present invention, FIG. 13a is a bottom surface illustrating the combtooth structure of the second connector 300 according to an embodiment of the present invention, and FIG. 13b is a perspective view of the second connector when viewed from the below according to an embodiment of the present invention.

The description of the foregoing embodiments may be equally or similarly applied to this embodiment. Hereinafter, it will be described with reference to FIGS. 12, 5A, and 5B.

### <Opening part 340>

An opening part 340 may be defined in the second connector 300. For example, the opening part 340 may be a space provided so that the partition walls 223 are disposed when the first connector 200 and the second connector 300 are coupled to each other. Specifically, for example, the opening part 340 may refer to a space between a protrusion portion 321-2 and the combtooth structure 350, which will be described later. In addition, the opening part 340 may refer to a space between the combtooth structures 350. When the first connector 200 and the second connector 300 are coupled to each other, the partition walls 223 may be inserted into the space between the protrusion portion 321-2 and the combtooth structure 350 or the space between the combtooth structures 350.

### <Combtooth structure 350>

The second connector 300 may include the combtooth base portion 360. For example, the combtooth base portion 360 may be a portion that faces the body portion 222 when the second connector 300 is inserted into the first connector 200.

The second connector 300 may include the combtooth structure 350. For example, the combtooth structure 350 may protrude from the combtooth base portion 360 toward the first connector 200. For another example, the combtooth structure 350 may have a shape corresponding to the protrusion 221 of the first connector 200.

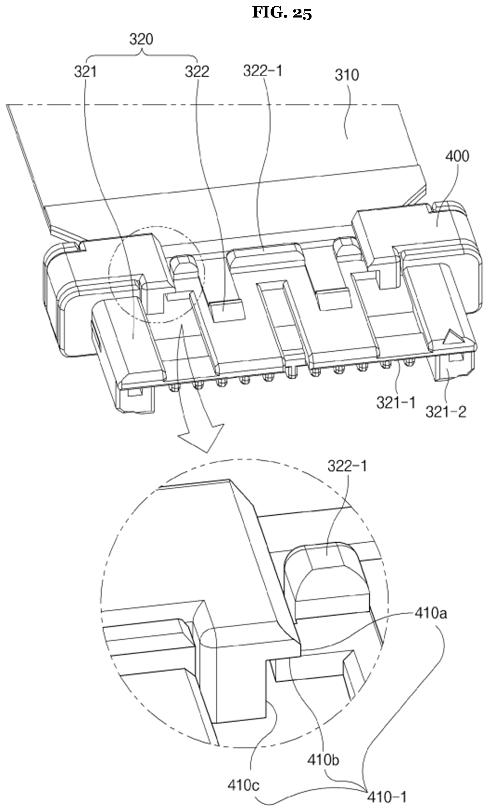

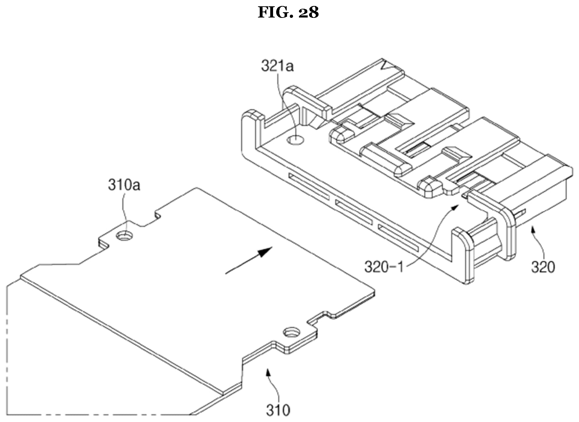

The second conductive part 310 may be inserted and seated in a recessed portion surrounded by a frame (e.g., frame 321 in FIGS. 25 and 28) and the connection part 322. A plurality of holes 350-1 may be defined to pass through the space between the combtooth structures 350, and the first conductive part 210 may be in contact with a bottom surface of the second conductive part 310 through the holes 350-1 passing therethrough. In this case, the first conductive part 210 may be electrically connected by being in contact with one surface of the second conductive part 310.

Based on the direction in which the second connector 300 is inserted, a ratio of the length of the portion of the second connector 300, which is inserted into the first connector 200, to the length of the combtooth structure 350 may range of 1 to 3. For example, based on the direction in which the second connector 300 is inserted, the length of the combtooth structure 350 may range of 2 mm to 4 mm, and the portion of the second connector 300, which is inserted into the first connector 200, may range of 4 mm to 6 mm. Specifically, when the length of the combtooth structure 350 is 2 mm, and the length of the inserted portion is 6 mm, a ratio of the length of the portion of the second connector 300, which is inserted into the first connector 200, to the length of the combtooth structure 350 may be 3. In addition, when the length of the combtooth structure 350 is 4 mm, and the length of the inserted portion is 4 mm, a ratio of the length of the portion of the second connector 300, which is inserted into the first connector 200, to the length of the combtooth structure 350 may be 1. However, it may not be limited thereto.

The second connector 300 may include a protrusion portion 321-2. For example, the protrusion portion 321-2 may protrude from each of both ends of the second connector housing 320 to surround both sides of the protrusion 221 when the second connector 300 is inserted into the first connector 200. In addition, the protrusion portion 321-2 may extend from each of both the ends of the second connector housing 320 based on the direction in which the second connector 300 is inserted. For another example, the protrusion portion 321-2 may protrude from the second connector housing 320 so that the second connector 300 faces an inner bottom surface when inserted into the first connector 200. Since the protrusion portion 321-2 is provided to surround the protrusion 221 of the first connector 200, the insertion of the second connector 200 may be guided. In addition, the second connector 200 may be guided to prevent the partition walls 223 from being damaged or destroyed to prevent the connection terminals of the first conductive part 210 from being short-circuited with each other.

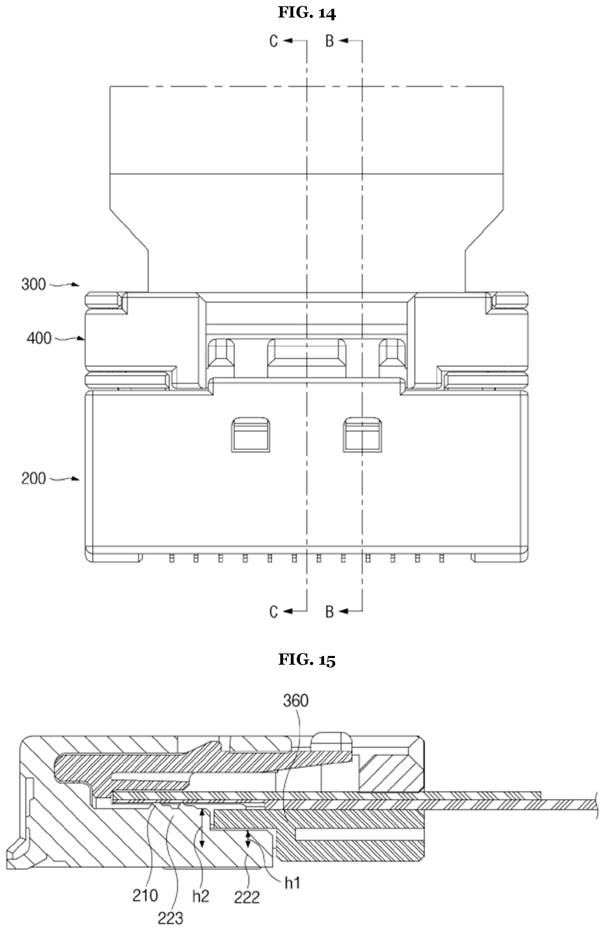

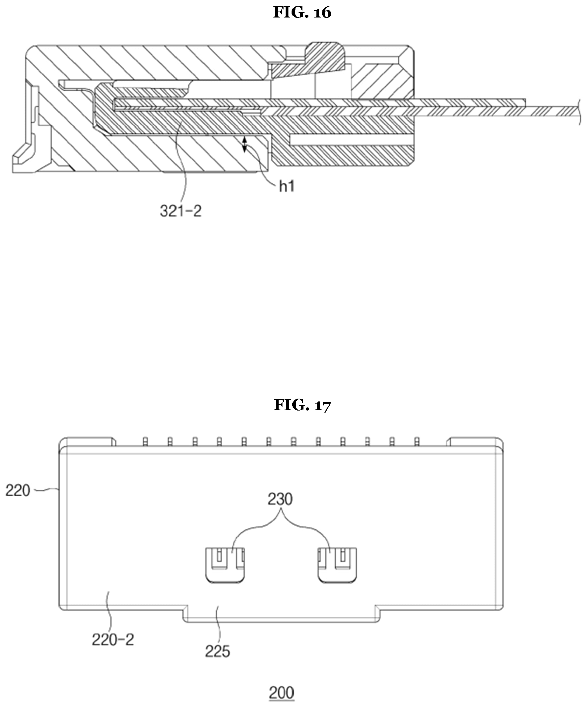

FIG. 14 is a plan view illustrating a state in which the first connector 200 and the second connector 300 are coupled to each other according to an embodiment of the present invention, FIG. 15 is a longitudinal cross-sectional view taken along line B-B in the state in which the first connector 200 and the second connector 300 are coupled to each other according to an embodiment of the present invention, and FIG. 16 is a longitudinal cross-sectional view taken along line C-C in the state in which the first connector 200 and the second connector 300 are coupled to each other according to an embodiment of the present invention. The description of the foregoing embodiments may be equally or similarly applied to this embodiment. Hereinafter, it will be described with reference to FIGS. 14 to 16.

### <Relationship between protrusion 221, combtooth structure 350, and combtooth base portion 360>

The second connector 300 may be inserted and mounted inside the first connector 200. In this case, the connection part 322 of the second connector 300 may be hooked to the hole 230 of the first connector 200.

The coupling housing 400 may restrict the movement of the second conductive part 310. For example, the coupling housing 400 may be mounted on the second connector housing 320 to restrict the movement of the second conductive part 310.

Referring to the cross-section along line B-B, the combtooth structure 350 may be inserted between the partition walls 223. For example, the combtooth structure 350 may be provided to be inserted into the space between the partition walls 223 when the second connector 300 is inserted and mounted on the first connector 200. In other words, the combtooth structure 350 and the partition walls 223 may have structures corresponding to each other to enable the insertion and coupling.

Referring to the cross-section along line C-C, the combtooth base portion 360 may be aligned with the body portion 222. For example, the combtooth base portion 360 may be provided to face and be aligned with the body portion 222 when the second connector 300 is inserted and mounted on the first connector 200. In other words, the combtooth base portion 360 and the body portion 222 may have structures that correspond to each other so that the combtooth base portion 360 and the body portion 222 are aligned with each other when facing each other.

### [Theme 3]

FIG. 17 is a plan view illustrating a configuration of the first connector 200 when viewed from the above according to an embodiment of the present invention, and FIG. 18 is a longitudinal cross-sectional view of the first connector 200 according to an embodiment of the present invention. The description of the foregoing embodiments may be equally or similarly applied to this embodiment. Hereinafter, description will be made with reference to FIGS. 17 and 18.

### <Structure of first connector housing 220>

The first connector 200 may include a first connector housing 220. An opening 220-1 may be defined in the first connector housing 220 to allow the second connector 300 to be inserted.

The first connector housing 220 may define the insertion space V. For example, the insertion space V may be defined by an upper portion 220-2, a side portion 220-3, and a lower portion 220-4 of the first connector housing 220. Specifically, the insertion space V may be defined by being surrounded by an inner surface of the upper portion 220-2, an inner surface of the side portion 220-3, and an inner surface of the lower portion 220-4.

The first conductive part 21 may be provided on the lower portion 220-4 to be electrically connected to the second connector 300.

The first connector housing 220 may have a hole 230 defined to pass through the upper portion 220-2 so that the second connector 300 is hooked.

The first connector housing 220 may include a protrusion rib 225. For example, the protrusion rib 225 may be disposed on an edge of the upper portion 220-2. Specifically, the protrusion rib 225 may be provided to protrude from the edge of the upper portion 220-2 at the side into which the second connector 300 is inserted. The protrusion rib 225 may reinforce structural rigidity of the upper portion 220-2 in which the hole 230 is defined.

FIG. 19 is a plan view illustrating the protrusion rib 225 of the first connector 200 according to an embodiment of the present invention. The description of the foregoing embodiments may be equally or similarly applied to this embodiment.

### <Structure of protrusion rib 225>

The edge of the upper portion 220-2 toward the opening 220-1 may include the protrusion rib 225. For example, the upper portion 220-2 may include the protrusion rib 225 that protrudes from the hole 230 toward the opening 220-1.

A distance A from the edge of the hole 230 toward the opening 220-1 to the end of the protrusion rib 225 may range of 3 times to 4 times a thickness T of the upper portion 220-2. For example, the thickness T of the upper portion 220-2 may range of 0.4 mm to 0.5 mm. In this case, the distance A may range of 1.2 mm to 2.0 mm.

A degree of protrusion A' of the protrusion rib 225 may be determined depending on the thickness T of the upper portion 220-2. For example, as the thickness T of the upper portion 220-2 becomes thicker, the degree of protrusion A' may increase.

The protrusion rib 225 may be disposed on the first connector housing 220 to reinforce the rigidity of the upper portion 220-2 in which the hole 230 is defined. For example, even if external force is applied, a pressure may be distributed in proportion to the degree to which the protrusion rib 225 protrudes to prevent the upper portion 220-2 from being cracked or damaged.

The cracks in the upper portion 220-2 may occur in a diagonal direction with respect to the edge on which the protrusion rib 225 is disposed. As the protrusion rib 225 is provided to protrude, a length g in the diagonal direction may also extend to reinforce strength in the diagonal direction.

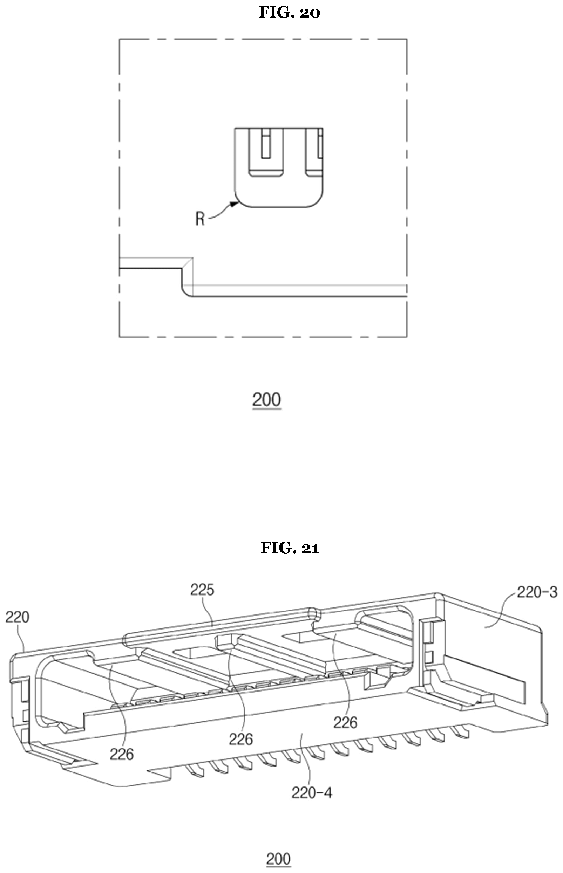

FIG. 20 is a plan view illustrating the hole 230 of the first connector 200 according to an embodiment of the present invention. The description of the foregoing embodiments may be equally or similarly applied to this embodiment.

### <Structure of hole 230>

The hole 230 may be defined in the first connector housing 220. For example, the hole 230 may have a round shape at the edge toward the opening 220-1. The round shape defined in the hole 230 may be provided so that a fillet radius value R is 0.3 mm to 1 mm.

The hole 230 may include a plurality of holes. For example, the plurality of holes may be defined along a direction parallel to the edge of the upper portion 220-2 toward the opening 220-1. The protrusion rib 225 may extend parallel to the direction in which the plurality of holes are defined.

When the protrusion rib 225 is provided to extend along the plurality of holes, the cracks or damage to the upper portion 220-1 in which the plurality of holes are defined may be effectively prevented from occurring. Even if external force is applied, a pressure may be distributed in proportion to the degree to which the protrusion rib 225 extends to prevent the upper portion 220-2 from being cracked or damaged.

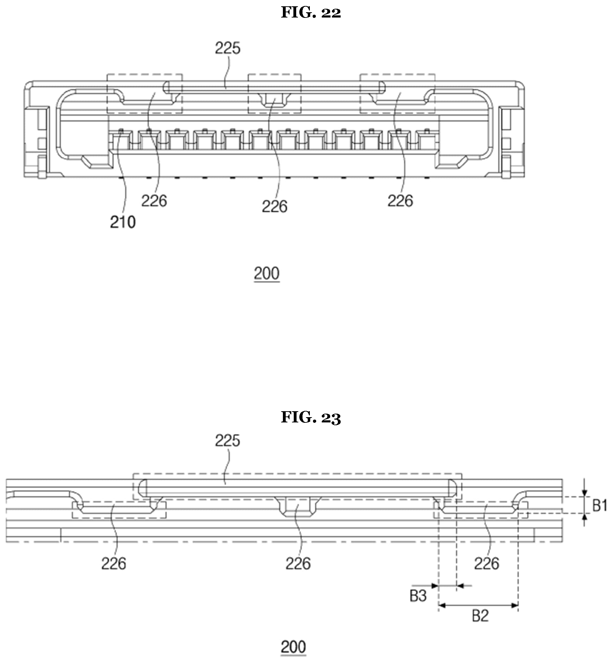

FIG. 21 is a perspective view of an internal rib 226 according to an embodiment of the present invention, and FIG. 22 is a front view illustrating the internal rib 226 according to an embodiment of the present invention. The description of the foregoing embodiments may be equally or similarly applied to this embodiment. Hereinafter, description will be made with reference to FIGS. 21 and 22.

### <Structure of internal rib 226>

The upper portion 220-2 may include the internal rib 226. For example, the internal rib 226 may protrude toward the insertion space V. In addition, the internal rib 226 may protrude in a direction parallel to the direction DI in which the second connector 300 is inserted.

The internal rib 226 may not interfere with the insertion of the second connector 300 into the insertion space V. For example, the internal rib 226 may be disposed on an area other than the insertion path toward the insertion space V of the second connector 300. For another example, a surface of the second connector housing 320 facing a surface of the upper portion 220-2 of the first connector housing 220, on which the internal rib 226 is disposed, may be provided in a corresponding structure.

The internal rib 226 may protrude in a range of 1 time to 2 times the thickness T of the upper portion 220-2. For example, when the thickness T of the upper portion 220-2 ranges of 0.4 mm to 0.5 mm, the internal rib 226 may protrude in the range of 0.8 mm to 1.0 mm. When the degree of protrusion of the internal rib 226 is designed to be in the range of 1 time to 2 times the thickness T of the upper portion 220-2, the rigidity may be effectively secured, regardless of the additional protrusion. However, the above-described numerical range may be illustrative and may not be limited thereto.

The upper portion 220-2 may include a plurality of internal ribs 226. For example, the internal ribs 226 may protrude toward the insertion space V. In addition, the internal ribs 226 may be provided symmetrically around the protrusion ribs 225.

The plurality of internal ribs 226 may be disposed alternately with the holes 230. For example, the plurality of internal ribs 226 may be disposed alternately with holes 230 based on the inner surface of the upper portion 220-2. For a specific example, the hole 230 may be two holes, and the internal ribs 226 may include three internal ribs alternately spaced apart from each other with the two holes 230 therebetween.

The internal rib 226 may reinforce the rigidity of the thin thickness T of the upper portion 220-2. In addition, the internal rib 226 may reinforce the rigidity of the upper portion 220-2 in which the hole 230 is defined.

FIG. 23 is a front view illustrating an arrangement of the protrusion rib 225 and the internal rib 226 according to an embodiment of the present invention. The description of the foregoing embodiments may be equally or similarly applied to this embodiment.

### <Arrangement of protrusion ribs 225 and internal ribs 226>

The first connector housing 220 may include the protrusion rib 225 and the internal rib 226. For example, the first connector housing 220 may include the protrusion rib 225 protruding from the edge of the upper portion 220-2 toward the opening 220-1 from the hole 230. In addition, the first connector housing 220 may include the internal rib 226 protruding from the upper portion 220-2 toward the insertion space V.

The protrusion rib 225 and the internal rib 226 may include an overlapping area. For example, the protrusion rib 225 and the internal rib 226 may include an overlapping area along the edge when viewed toward the opening 220-1 in the direction DI in which the second connector 300 is inserted.

Referring to FIG. 23, the internal rib 226 may protrude toward the insertion space V at a predetermined protrusion length B1. In addition, the internal rib 226 may extend along the edge of the opening 220-1 of the upper portion 220-2 to a predetermined extension length B2. In this case, the protrusion rib 225 and the internal rib 226 may have a predetermined overlapping length B3. A length of the overlapping area may be the overlapping length B3. For a specific example, the overlapping length B3 may range of 25% to 50% of the length B2 along the edge of the internal rib 226. As the overlapping length B3 increases, strength of reinforcement may increase.

The internal rib 226 may be provided in plurality, and the plurality of internal ribs 226 may have different widths. Specifically, the internal rib 226 may include three internal ribs. The three internal ribs may be disposed between the two holes and may include a central rib having a first width and outer ribs which are disposed outside the two holes and each of which has a second width greater than the first width.

In the three internal ribs, a degree to which the central rib protrudes toward the insertion space may be greater than a degree to which the outer ribs protrude toward the insertion space. The central rib may have high possibility of being contacted when viewed from the insertion path when the second connector 300 is inserted into the insertion space. The central rib may protrude more than the outer ribs to reinforce the strength, thereby preventing the damage due to the contact. In addition, the second connector 300 may perform a guide function when inserted. The central rib may extend to an area from which the protrusion rib 225 protrudes. In other words, the central rib may extend further toward the opening 220-1 than the outer rib. The width of each of the internal ribs and the degree of protrusion of each of the internal ribs may vary depending on the number, position, and size of the hole 230.

The degree of each of protrusions A' and B1 of the protrusion rib 225 and the internal rib 226 may be determined depending on the thickness T of the upper portion 220-2. When the degree of each of protrusions A' and B1 is determined depending on the thickness T of the upper portion 220-2, the rigidity of the thin thickness T of the upper portion 220-2 in which the hole 230 is defined may be reinforced adaptively according to the structure.

### [Theme 4]

### <Separation prevention structure of coupling housing 400>

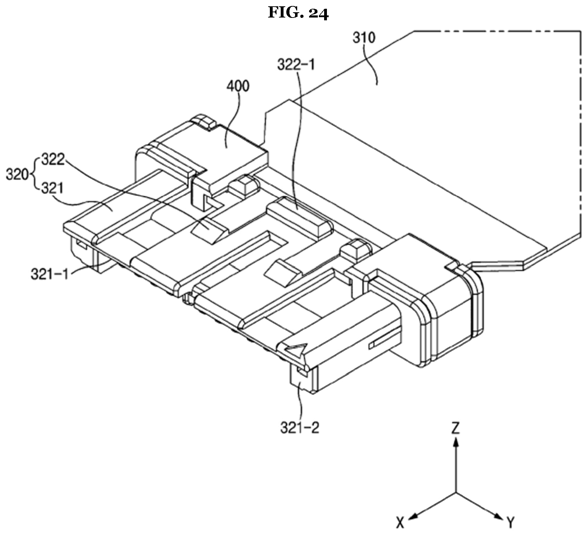

FIG. 24 is a perspective view of the second connector according to an embodiment of the present invention.

Referring to FIG. 24, the connector module 100 may include the first connector 200 and the second connector 300 (see FIG. 5).

The first connector 200 may be electrically connected to the control unit 10. The first connector 200 may include the first connector housing 220 and the first conductive part 210.

The first connector housing 220 may define an outer appearance of the first connector 200. For example, the first connector housing 220 may include a housing shape of which the inside has a recessed side. Specifically, the first connector housing 220 may include an opening 220-1 with one side opened and may include a first recessed portion 220a that is recessed inward from the opening 220-1. The second connector 300 may be inserted and coupled to the first recessed portion 220a.

The first conductive part 210 may be connected to the first connector housing 220 and may be electrically connected to the control unit.

The second connector 300 may be electrically connected to the first connector 200. For example, the second connector 300 may be inserted and coupled to the first connector 200. Specifically, the second connector 300 may be inserted into the first recessed portion 220a defined inside the first connector housing 220 and coupled to the first connector 200. For example, one side of the second connector 300 may be electrically connected to the first connector 200, that is, the first conductive part 210, and the other side of the second connector 300 may be electrically connected to a plurality of battery cells 2.

The second connector 300 may include the second connector housing 320, the second conductive part 310, and the coupling housing 400.

The second connector housing 320 may define an outer appearance of the second connector 300 and may be a configuration that is inserted and coupled to the first connector 200. In other words, the second connector housing 320 may be inserted into the first recessed portion 220a of the first connector 200 and integrally coupled to the first connector 200.

The second connector housing 320 may include a frame 321 and a connection part 322 (see FIG. 24).

The frame 321 may be inserted and coupled to the first connector 200. In other words, the frame 321 may be inserted into the first recessed portion 220a of the first connector housing 220 and structurally coupled to the first connector 200.

The connection part 322 may be connected to one surface of the frame 321 and may be coupled to the first connector 200. For example, the connection part 322 may be connected to a top surface of the frame 321. The connection part 322 may be coupled to the first connector 200 by being coupled to an inner top surface of the first connector housing 220 while being connected to the top surface of the frame 321.

In this case, the connection part 322 may be coupled to the first connector 200 through the hook coupling. For example, the connection part 322 may include a lever shape. Specifically, there is a portion passing through the top surface of the first connector housing 220, that is, a hole 230 so that the top surface of the first connector housing 220 and the first recessed portion 220a communicate with each other, and the connection part 322 may be coupled to the penetrated portion of the top surface of the first connector housing 220.

More specifically, based on the direction in which the second connector 300 is inserted into the first connector 200, a front side of the connection part 322 may move upward and downward from the connection part 322 in the state of being connected to the frame 321.

In the state in which the connection part 322 is spaced a predetermined interval from the second conductive part 310, the second connector 300 may be inserted and coupled to the first connector 200, and thus, the connection part 322 may moves downward to be coupled to the penetrated portion of the top surface of the first connector housing 220, thereby connecting the first connector 200 to the second connector 300 through the connection part 322. In this case, the connection part 322 may be spaced a predetermined interval from the second conductive part 310.

On the other hands, when the connection part 322 moves downward by receiving external force from a user, etc., the connection may be released, and thus, the second connector 300 may be separated from the first connector 200.

FIG. 25 is an enlarged view of the second connector according to an embodiment of the present invention. Referring to FIG. 25, the connection part 322 may include a protrusion portion 322-1 that protrudes upward on the top surface thereof. In a state in which the first connector 200 and the second connector 300 are coupled to each other, the user may press the protrusion portion 322-1 of the connection part 322 to separate the second connector 300 from the first connector 200.

The second conductive part 310 may be electrically connected to the first conductive part 210 by inserting at least a portion of the second conductive part 310 into the frame 321. In other words, the second conductive part 310 may be electrically connected to the plurality of battery cells to receive electrical signals from the plurality of battery cells and transmit the received electrical signals to the first conductive part 210. For example, the second conductive part 310 may include a flexible flat cable (FFC).

A region surrounded by the frame 321 and the connection part 322 and having an opened one side may be defined inside the frame 321, and the second conductive part 310 may be inserted and coupled to be surrounded by the frame 321 and the connection part 322.

The coupling housing 400 may couple the second connector housing 320 to the second conductive part 310. For example, the coupling housing 400 may surround the second connector housing 320 in the state in which the second conductive part 310 is inserted and coupled to the second connector housing 320. Specifically, the coupling housing 400 may function to prevent the second conductive part 310 from being separated from the second connector housing 320 by compressing and holding the second connector housing 320 and the second conductive part 310.

At the same time, the coupling housing 400 may restrict the connection part 322 from being separated from the frame 321 through a stepped structure 410-1 that is in contact with one surface of the connection part 322. In other words, the structure in which a portion of the connection part 322 is hooked with the coupling housing 400 may prevent the connection part 322 from being excessively deformed or moving upward.

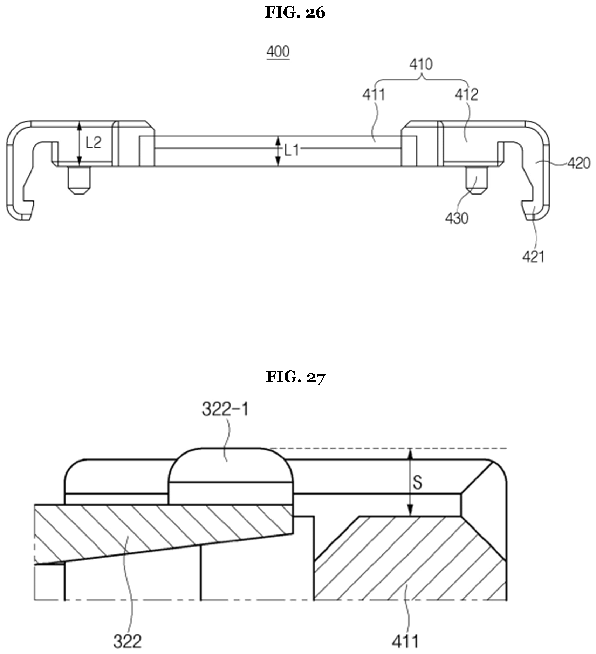

FIG. 26 is a front view of the coupling housing according to an embodiment of the present invention.

Referring to FIG. 26, the coupling housing 400 may include a coupling body 410 and a coupling part 420.

The coupling body 410 may be in contact with the second connector housing 320 and the second conductive part 310 to couple the second connector housing 320 to the second conductive part 310. For example, the coupling body 410 may be disposed at a rear side of the connection part 322 to surround a portion of a rear side of the connection part 322 and compress the second conductive part 310, thereby coupling the second connector housing 320 to the second conductive part 310.

The coupling body 410 may include a first coupling body 411 and a second coupling body 412.

The first coupling body 411 may be disposed at the rear side of the connection part 322 based on the direction in which the second connector 300 is inserted into the first connector 200. For example, the first coupling body 411 may be disposed at the rear side of the connection part 322 and then may be formed and arranged to extend to both sides when viewed in the direction in which the second connector 300 is inserted into the second connector 300. That is, the first coupling body 411 may be disposed along the rear side of the connection part 322.

The second coupling body 412 may be disposed at each of both sides of the first coupling body 411 to surround a portion of each of both the sides of the connection part 322. In this case, a portion of the second coupling body 412 surrounding portions of both the sides of the connection part 322 may include a stepped portion 410-1. In other words, the coupling body 410 may include a stepped portion 410-1 that is in contact with one surface of the connection part 322 so as to be stepped. However, the stepped portion 410-1 may not be necessarily disposed at both the sides of the connection part 322, but may be disposed corresponding to at least one of both the sides of the connection part 322.

Based on the direction in which the second connector 300 is inserted, the connection part 322 may be hooked with the stepped portion 410-1 of the coupling body 410 to restrict the movement of the connection part 322 upward. For example, when the rear side of the connection part 322 moves upward, the stepped portion 410-1 may be in contact with the rear side of the connection part 322.

Specifically, referring to FIG. 25, as seen from the front side of the connection part 322, the stepped portion 410-1 may have a first surface 410a disposed on an upper side of the connection part 322, a second surface 410b having one side that is connected to a lower side of the first surface 410a and is in contact with the top surface of the connection part 322, and a third surface 410c connected to the other side of the second surface 410b and disposed along a side surface of the connection part 322. In this case, since the top surface of the connection part 322 is hooked with the second surface 410b, the top surface of the connection part 322 may be disposed below an extension line of the second surface 410b. That is, a moving radius of the connection part 322 may be restricted so that the top surface of the connection part 322 does not move upward from the second surface 410b.

As the connection part 322 is hooked with the second surface 410b, the movement of the connection part 322 toward the upper side of the second surface 410b may be restricted. According to this structure, the movement of the connection part 322 to a certain radius is restricted, and the problem of excessive deformation or deviation to the upper side of the frame 321 may be prevented.

As a result, the problem of the connection part 322 being lifted upward and being plastically deformed or damaged may be prevented to improve structural stability of the second connector 300, and thus, coupling stability between the first connector 200 and the second connector 300 may be improved.

FIG. 27 is an enlarged view of the connection part and the coupling housing according to an embodiment of the present invention.

Referring to FIG. 27, a top surface of the first coupling body 411 may be disposed lower than a top surface of the protrusion portion 322-1 of the connection part 322. In other words, the protrusion portion 322-1 of the connection part 322 may be disposed to be higher with respect to an extending surface of the top surface of the first coupling body 410. Since the protrusion portion 322-1 of the connection part 322 is disposed above the top surface of the first coupling body 411, the user may more easily press and handle the protrusion portion to facilitate use convenience of the connector module 100.

In this case, a distance S between the top surface of the first coupling body 411 and the top surface of the protrusion portion 322-1 of the connection part 322 may be 0.5 mm to 0.7 mm. When the distance S between the top surface of the first coupling body 411 and the top surface of the protrusion portion 322-1 of the connection part 322 is less than 0.5 mm, the top surface of the first coupling body 411 and the top surface of the protrusion portion 322-1 of the connection part 322 may be difficult to be distinguished from each other to deteriorate the use convenience of the connector module 100. On the other hands, when the distance S between the top surface of the first coupling body 411 and the top surface of the protrusion portion 322-1 of the connection part 322 exceeds 0.7 mm, the protrusion height 322-1 of the connection part 322 may be excessively high, an overall height of the connector module 100 may increase, and thus, a space inside the battery module 1 may be inefficiently occupied.

In addition, when the height of the first coupling body 411 is L1, and the height of the second coupling body 412 is L2, expression: 0.3≤L1/L2≤0.5 may be satisfied. When L1/L2 is less than 0.3, a height difference between the first coupling body 411 and the second coupling body 412 decreases, it may be difficult to find a position of the protrusion portion 322-1 of the connection part 322, and thus, the use convenience of the connector module 100 may be deteriorated. On the other hand, when L1/L2 exceeds 0.5, the height of the first coupling body 411 may become significantly smaller, and thus, there is a risk that the first coupling body 411 is easily damaged, and the height of the second coupling body 412 may increase considerably. As a result, a problem in which the entire height of the connector module 100 increases may occur.

The height L1 of the first coupling body 411 (in other words, a thickness of the first coupling body 411) may have a value of 0.8 mm to 1.2 mm. Due to the thickness of the first coupling body 411, the hand may be supported without being excessively pressed downward when pressing the connection part 322. This may allow the connection part 322 to move only within an allowable range to reduce the risk of the damage and provide the use convenience.

The coupling part 420 may be connected to one side of the coupling body 410 and may be coupled to a side surface of the second connector housing 320. For example, the coupling part 420 may include a structure extending from each of both sides of the coupling body 410 to surround both sides of the second connector housing 320. That is, the coupling part 420 may be disposed along both sides of the frame 321 and coupled to both the sides of the frame 321.

The coupling part 420 may be coupled to a side surface of the frame 321 through a ring structure. Specifically, one side of the coupling part 420 may be connected to the coupling body 410, and the ring structure 421 may be disposed on the other end of the coupling part 420. The ring structure 421 of the coupling part 420 may be disposed along the side surface of the frame 321 and coupled to the lower side of the frame 321.

More specifically, the coupling part 420 may include an inclined surface that is inclined toward the side surface of the frame 321, and the side surface of the frame 321 may include an inclined surface corresponding to the inclined surface of the coupling part 420. The ring structure 421 of the coupling part 420 may be hooked with the side surface of the frame 321 through a sliding method in which the inclined surface of the coupling part 420 moves along the inclined surface of the side surface of the frame 321. In other words, when the second conductive part 310 is inserted into the frame 321, the coupling housing 400 may be coupled in a direction perpendicular to the direction in which the second conductive part 310 is inserted, and the coupling housing 400 may be coupled to move along the inclined surface of the side surface of the inclined surface of the coupling part 420, and thus, the ring structure 421 of the coupling part 520 may be coupled to a lower side of the side surface of the frame 321.

### [Theme 5]

### <Penetrated structure of coupling housing 400>

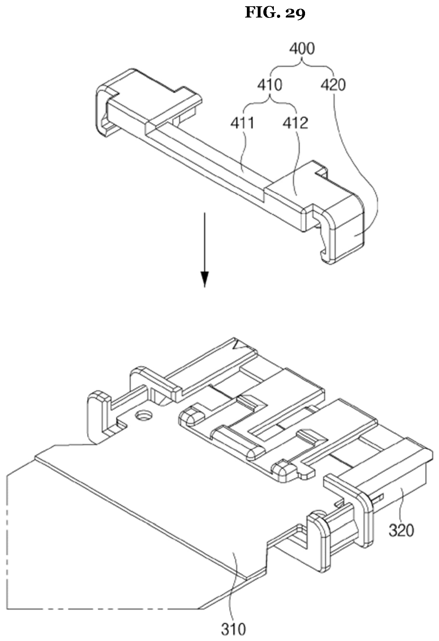

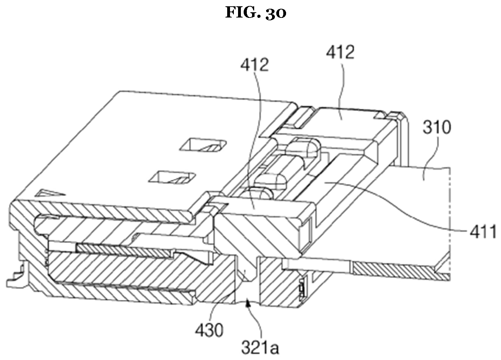

FIG. 28 is a perspective view illustrating a configuration in which the second conductive part is inserted into the second connector housing according to an embodiment of the present invention, FIG. 29 is a perspective view illustrating a configuration in which the coupling housing is coupled to the second connector housing and the second conductive part according to an embodiment of the present invention, and FIG. 30 is a cross-sectional view of the connector module according to an embodiment of the present invention.

Referring to FIGS. 28 to 30, the coupling housing 400 may pass through the second connector housing 320 and the second conductive part 310 to couple the second connector housing 320 to the second conductive part 310. For example, the coupling housing 400 may further include a coupling pin 430 that protrudes from the coupling body 410 to pass through the second connector housing 320 and the second conductive part 310. In other words, the coupling pin 430 may protrude from a bottom surface of the coupling body 410 toward the second conductive part 310. The coupling pins 430 may be provided as a pair on both sides of the bottom surface of the coupling body 410.

Specifically, the coupling body 410 may protrude toward the second conductive part 310 to define a portion that is in contact with the second conductive part 310. In addition, the coupling body 410 may protrude toward the second conductive part 310 to provide a portion that is in contact with the conductive film 311. The coupling pin 430 may be disposed to protrude from a portion protruding downward from the coupling body 410. In other words, bottom surfaces of the first coupling body 411 and the second coupling body 412 may provide the same surface. Due to the ring structure of the coupling part 420, the bottom surfaces of the first coupling body 411 and the second coupling body 412 may have a structure that protrudes more toward the second conductive part 310 compared to the bottom surface of the coupling part 420, and the coupling pin 430 may be disposed to protrude from the bottom surfaces of the first coupling body 411 and the second coupling body 412.

An end of the coupling pin 430 may include at least one of a curved shape or a horn shape. According to this structure of the end of the coupling pin 430, ease of manufacturing may increase in the process of coupling the coupling pin 430 to the second connector housing 320.

The second connector housing 320 may include a first coupling hole 321a that is penetrated. For example, the first coupling hole 321a may be defined in an inner bottom surface of the frame 321. Specifically, the second conductive part 310 may be inserted and coupled to a recessed portion 320-1 surrounded by the frame 321 and the connection part 322, the inner bottom surface of the frame 321 may be disposed at an opposite to the connection part 322 based on the recessed portion 320-1, and a first coupling hole 321a may be defined to pass through the inner bottom surface of the frame 321. That is, the first coupling hole 321a may be defined to pass from the inner bottom surface of the frame 321 to the bottom surface of the frame 321.

The second conductive part 310 may include a second coupling hole 310a that is penetrated. That is, the second coupling hole 310a may be defined to pass from the top surface to the bottom surface of the second conductive part 310. In this case, when the second conductive part 310 is inserted and coupled to the second connector housing 320, the first coupling hole 321a and the second coupling hole 310a may be defined in the same line. In addition, when the second conductive part 310 is inserted and coupled to the second connector housing 320, the coupling pin 430 may be disposed to integrally pass through the first coupling hole 321a and the second coupling hole 310a.

The direction in which the second conductive part 310 is inserted into the second connector housing 320 and the direction in which the coupling pin 430 passes may be perpendicular to each other.

According to this structure, the coupling pin 430 may restrict the second conductive part 310 from being separated from the second connector housing 320. Specifically, the coupling pin 430 may fix the second conductive part 310 to the second connector housing 320 so that the second conductive part 310 restricts the movement of the second conductive part 310 in a direction parallel to the direction in which the second conductive part 310 is inserted into the second connector housing 320.

The coupling pin 430 may be disposed to pass through the first coupling hole 321a and the second coupling hole 310a, and simultaneously, the coupling hole 420 may be coupled to both sides of the frame 321 through the ring structure, and thus, coupling force between the second connector housing 320 and the second conductive part 310 may further increase.

As a result, the coupling force between the second connector housing 320 and the second conductive part 310 may increase through the coupling pin 430, and thus, the structural stability of the connector module 100 may increase.

Additionally, according to this structure of the coupling pin 430, a contact area between the first conductive part 210 and the second conductive part 310 may be maintained constantly. In other words, the second conductive part 310 may be fixed to a certain position inside the second connector housing 320, and the first conductive part 210 and the second conductive part 310 may always define the contact area with a constant area, and pre-planned contact methods and circuit arrangements may be maintained to improve quality of transmission and reception of electrical signals. As a result, due to this structure, the electrical signals may be transmitted and received more precisely through the connector module 100, and thus, control quality of the control unit 10 may be further improved.

### [Theme 6]

### <Tilting prevention structure>

The frame 321 may include a structure for preventing the second connector 300 from being tilted. A tilting phenomenon may refer to a phenomenon in which a posture and angle of the second connector 300 are changed in the state in which the second connector 300 is coupled to the first connector 200. This tilting phenomenon may occur due to weakening of the coupling force between the first connector 200 and the second connector 300, and thus, the problem that impedes the structural stability of the connector module 100 such as the lifting of the second connector 300 or the separation from the first connector 200 may occur.

The tilting phenomenon of the second connector 300 may occur when the second connector 300 rotates, such as rolling, yawing, and pitching about each axis. Specifically, referring to FIG. 24, there may be a rolling motion rotating about an x-axis, a pitching motion rotating about a y-axis, and a yawing motion rotating about a z-axis. In this case, the x-axis may be defined in a direction parallel to the direction in which the second connector 300 is inserted. The y-axis may be defined along a direction perpendicular to the x-axis and parallel to the ground. The z-axis may be defined in a direction perpendicular to the ground so as to be perpendicular to the x-axis and the y-axis.

A structure may need to prevent such the rotational movement and improve the coupling stability of the second connector 300.

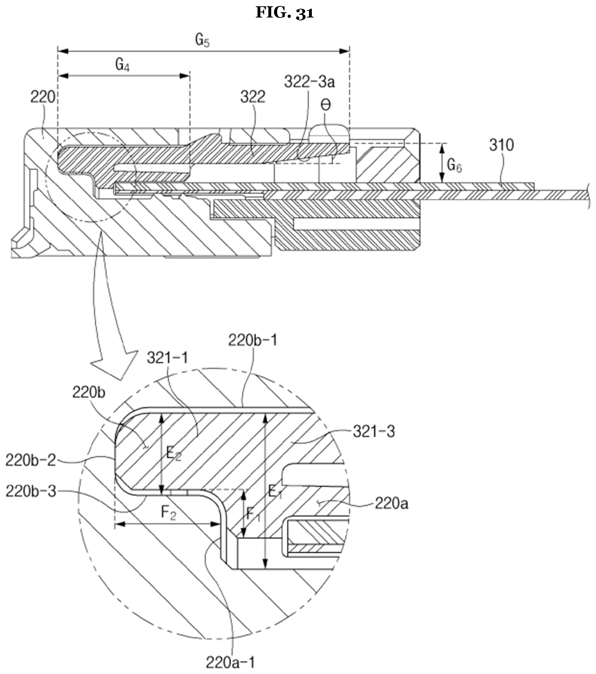

FIG. 31 is an enlarged view illustrating an inside of the connector module according to an embodiment of the present invention.

Referring to FIGS. 25 and 31, the frame 321 may include a body of the frame 321, and at least one of a first protrusion portion 321-1 or a second protrusion portion 321-2, which protrudes from the body of the frame 321 to one side.

The first protrusion portion 321-1 may be disposed to protrude to a front side of the body of the frame 321 based on the direction in which the second connector 300 is inserted. That is, the first protrusion portion 321-1 may be a portion that extends from the body of the frame 321 toward the x-axis direction (see FIG. 24) and is inserted into the first connector 200. For example, the first connector 200 may further include a second recessed portion 220b that is recessed in front of the first recessed portion 220a, and the first protrusion portion 321-1 may be inserted into the second recessed portion 220b.

The second recessed portion 220b may be a portion that is recessed from the first recessed portion 220a toward the x-axis direction inside the second connector housing 220. In this case, when the second connector 300 is viewed from a side surface thereof based on the direction in which the second connector 300 is inserted, a height of the first recessed portion 220a may be greater than that of the second recessed portion 220b. That is, when the height of the first recessed portion 220a is E1, and the height of the second recessed portion 220b is E2, the conditional expression: E1>E2 may be satisfied. Correspondingly, when viewed from the side surface, the height of the first protrusion portion 321-1 may be disposed to protrude from the body of the frame 321 so as to be less than the height of the body of the frame 321.

In addition, when the second connector 300 is viewed from the side surface thereof based on the direction in which the second connector 300 is inserted, the second recessed portion 220b may include a first surface 220b-1 extending from an inner top surface of the first recessed portion 220a, a second surface 220b-2 having one side connected to the first surface 220b-1 and disposed to define a front surface, and a third surface 220b-3 connected to the other side of the second surface 220b-2 to define a bottom surface.

The first surface 220b-1 may be a top surface of the second recessed portion 220b. The second surface 220b-2 may be the innermost surface, that is, the front surface, of the second recessed portion 220b. The second surface 220b-2 may be perpendicular to the first surface 220b-1. The third surface 220b-3 may define the bottom surface of the second recessed portion 220b and may be perpendicular to the second surface 220b-2. That is, the first surface 220b-1, the second surface 220b-2, and the third surface 220b-3 may be disposed along an outer surface of the first protrusion portion 321-1.

The first recessed portion 220a may include a support surface 220a-1 connected to the third surface 220b-3 to extend downward from the third surface 220b-3. That is, the support surface 220a-1 may be disposed below the first protrusion portion 321-1.

The first surface 220b-1 may support a top surface of the first protrusion portion 321-1. The second surface 220b-2 may support a front surface of the first protrusion portion 321-1. The third surface 220b-3 may support the bottom surface of the first protrusion portion 321-1. The support surface 220a-1 may support the front surface of the frame 321, that is, the front surface of the body of the frame 321.

According to this structure, the first protrusion portion 321-1 may be hooked with the second recessed portion 220b to restrict the rotational movement of the second connector 300. Specifically, the pitching motion rotating about the y-axis may be restricted.

In order to maximize the prevention of the pitching motion, each surface of the first recessed portion 220a and the second recessed portion 220b may satisfy a specific conditional expression. For example, a length F1 of the support surface 220a-1 of the first recessed portion 220a may be 0.4 mm to 0.6 mm. When the length F1 of the support surface 220a-1 of the first recessed portion 220a is less than 0.4 mm, a contact area between the support surface 220a-1 and the front surface of the frame 321 may be significantly narrowed to reduce a support area for preventing the pitching, and thus, the pitching operation of the second connector 300 may not be effectively prevented. On the other hand, when the length F1 of the support surface 220a-1 of the first recessed portion 220a exceeds 0.6 mm, there may be a risk of generating an unintended conductive area in the design by expanding the unnecessary conductive area.

In addition, a length F2 of the second surface 220b-2 of the second recess part may satisfy a specific conditional expression. For example, the length F2 of the second surface 220b-2 may be 0.9 mm to 1.1 mm. When the length F2 of the second surface 220b-2 is less than 0.9 mm, a recessed depth of the second recessed portion 220b may be small, which may reduce the effect of preventing the tilting. On the other hand, when the length F2 of the second surface 220b-2 exceeds 1.1 mm, the length of the first protrusion portion 321-1 may become longer compared to the thickness, and thus, a problem that the first protrusion portion 321-1 is damaged by the tilting phenomenon may occur.

Additionally, the first protrusion portion 321-1 may be disposed along a direction extending to each of both sides of the direction in which the second connector 300 is inserted. In other words, the first protrusion portion 321-1 may be disposed in a direction parallel to the y-axis direction. According to this structure, due to the shape of the first protrusion portion 321-1, the rolling of the second connector 300 may be prevented in the state in which the second connector 300 is inserted and coupled to the first connector 200.

The second protrusion portion 321-2 may be disposed to protrude upward or downward from the body of the frame 321 based on the direction in which the second connector 300 is inserted. For example, the second protrusion portion 321-2 may be disposed to protrude from the bottom surface of the body of the frame 321 in a direction toward the second conductive part 310. Specifically, the second protrusion portion 321-2 may be disposed to protrude downward so as to be parallel to the z-axis direction.

Referring to FIG. 9, the first connector 200 may further include a third recessed portion 220c that is recessed upward or downward from the first recessed portion 220a based on the direction in which the second connector 200 is inserted, and the second protrusion portion 321-2 may be inserted into the third recessed portion 220c. That is, the third recessed portion 220c may extend from the first recessed portion 220a along the z-axis direction.

When viewed from the direction in which the second connector 300 is inserted, that is, the x-axis direction, the third recessed portion 220c may be disposed at each of both sides of the first recessed portion 220a. Likewise, the second protrusion portion 321-2 may be disposed at each of both sides of the frame 321 to correspond to the third recessed portion 220c.

Additionally, the third recessed portion 220c disposed at each of both sides of a lower side of the first recessed portion 220a may have an inclined stepped structure. In other words, based on the x-axis direction, the outermost inner surface of the third recessed portion may include a stepped and inclined structure with respect to an inner surface of the first recessed portion 220a.

According to this structure, the second protrusion portion 321-2 may be inserted and coupled to the third recessed portion 220c and then be hooked with the third recessed portion 220c to restrict the rotation of the second connector 300. Specifically, the yawing operation of the second connector 300 may be prevented by fitting the second protrusion portion 321-2. In order to maximize the above effect, the second protrusion portion 321-2 may extend in a longitudinal direction parallel to the direction in which the second connector 300 is inserted.

### [Theme 7]

### <Structure for improving fixing force of first conductive part 210 and second conductive part 310>

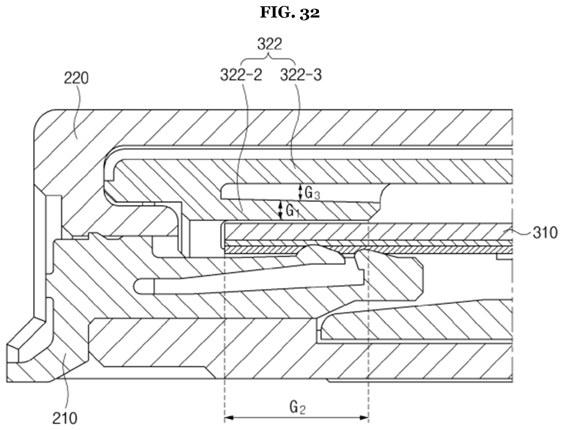

FIG. 32 is a cross-sectional view illustrating the inside of the connector module according to an embodiment of the present invention.

Referring to FIG. 32, the first conductive part 210 may be electrically connected only to a single surface of the second conductive part 310. In other words, the first conductive part 210 may not be a structure that surrounds the second conductive part 310, but may be only in contact with one surface of the second conductive part 310. For example, the first conductive part 210 may be electrically connected to the second conductive part 310 by be in contact with the bottom surface of the second conductive part 310 in the state of being disposed through the first connector housing 220.

Specifically, referring to FIGS. 25 and 28, the second connector 300 may be inserted and coupled to the recessed portion surrounded by the frame 321 and the connection part 322, and the inner bottom surface of the frame 321 may be disposed at an opposite to the connection part 322 based on the recessed portion so that the inner bottom surface of the frame 321 supports the bottom surface of the second conductive part 310. Here, referring to FIG. 13A, a plurality of holes 350-1 may be defined to pass through the inner bottom surface. In other words, the plurality of holes 350-1 may be defined to pass through the space between the combtooth structures 350, and the first conductive part 210 may be in contact with a bottom surface of the second conductive part 310 through the holes 350-1 passing therethrough.

According to this structure, the first conductive part 210 may be electrically connected by being in contact with only one surface of the second conductive part 310, not both sides of the second conductive part 310, and thus, a height of the coupled structure of the first conductive part 210 and the second conductive part 310 may be reduced to reduce the overall height of the connector module 100. However, a problem in which contact force between the first conductive part 210 and the second conductive part 310 is weakened may occur, and the connector module 100 may include a structure for preventing the problem of the weakened contact force from occurring.

The connection part 322 may be in contact with the top surface of the second conductive part 310 to apply a pressure to the top surface of the second conductive part 310, thereby strengthening the contact force between the first conductive part 210 and the second conductive part 310. For example, the front side of the connection part 322 may be fixedly connected to the top surface of the frame 321, and the rear side of the connection part 322 may be movable in an upward or downward direction. Here, the front side of the connection part 322 connected to the top surface of the frame 321 may include a ring structure defining an empty space at the inside thereof. That is, the connection part 322 may include an elastic material and be elastically deformed by allowing the rear side to move upward or downward through the ring structure.

Specifically, the connection part 322 may include a contact portion 322-2 that is in contact with the top surface of the second conductive part 310. Additionally, the connection part 322 may include a connection portion 322-3 coupled to the first connector 200. In the state in which a front side of the connection portion is connected to a front side of the contact portion 322-2, the connection portion 322-3 may extend backward based on the insertion direction of the second connector 300, and a portion of the connection portion 322-3 may be spaced a predetermined distance from the contact portion 322-2. The connection portion 322-3 may be coupled to the hole 230 defined to pass through the top surface of the first connector housing 220, or the coupling of the connection portion 322-3 may be released from the hole 230, and thus, the second connector 300 may be coupled to the first connector, or the coupling between the second connector 300 and the first connector 200 may be released.

More specifically, in the state in which the contact portion 322-2 is in contact with the top surface of the second conductive part 310, and the front side of the connection part 322 is fixed, external force may be applied to a rear top surface of the connection portion 322-3 so that the rear side of the connection portion 322-3 moves downward to approach the contact portion 322-2 by using a principle of a lever. In this process, after the second connector 300 is inserted into the first connector 200, the connection portion 322-3 may move upward again, and a portion of the top surface of the connection portion 322-3 may protrude to be fitted into the hole defined to pass through the top surface of the first connector housing 220, and thus, the second connector 300 may be connected to the first connector 200. The process of releasing the connection of the first connector 200 and the second connector 300 may be performed through an opposite operation. As a result, according to the structure of the connection portion 322, the second conductive part 310 may be more firmly fixed by being fitted between the contact portion 322-2 and the first conductive part 210.

Additionally, in order to further increase in the fixing effect, each portion of the connection part 322 may satisfy a specific conditional expression.

For example, when viewed from the side surface based on the direction in which the second connector 300 is inserted and coupled, a height G1 of the contact portion 322-2 may be 0.6 mm to 1.5 mm. When the height G1 of the contact portion 322-2 is less than 0.6 mm, the thickness of the contact portion 322-2 may become excessively small, and thus, the function of the contact portion 322-2, which supports the second conductive part 310 to strengthen the fixing force of the first conductive part 210 and the second conductive part 310, may be lost. Conversely, when the height G1 of the contact portion 322-2 exceeds 1.5 mm, the thickness of the connection part 322 itself may increase to cause the problem that the overall height of the connector module 100 increases, and the spaced distance between the contact portion 322-2 and the connection portion 322-3 may become excessively narrow to cause a problem that the function of the connection part 322 is not performed smoothly.

In addition, a length G2 of the contact portion 322-2 disposed along the direction in which the second connector 300 is inserted and coupled and being in contact with the second conductive part 310 may be 1.8 mm to 2.1 mm. When the length G2 of the contact part 322-2 that is in contact with the second conductive part 310 is less than 1.8 mm, the contact force between the contact part 322-2 and the second conductive part 310 may be weakened, and thus, the function of the contact portion 322-2, which strengthens the fixing force of the first conductive part 210 and the second conductive part 310, may be lost. On the other hand, when the length G2 of the contact portion 322-2 that is in contact with the second conductive part 310 exceeds 2.1 mm, the spaced space between the connection part 322 and the second conductive part 310 may be excessively invaded, and thus, the function of the connection part 322 may be deteriorated.

Additionally, a spaced distance G3 between the contact portion 322-2 and the connection portion 322-3 may be 0.23 mm to 0.27 mm. If the spaced distance G3 between the contact portion 322-2 and the connection portion 322-3 is 0.23 mm or less, a problem in which the function of the connection part 322 is deteriorated may occur. On the other hand, when the spaced distance G3 between the contact portion 322-2 and the connection portion 322-3 exceeds 0.27 mm, the thicknesses of the contact portion 322-2 and the connection portion 322-3 may become excessively thin, a problem that the contact portion 322-2 and the connection portion 322-3 are easily damaged by external factors may occur.

When viewed from the side surface based on the direction in which the second connector 300 is inserted and coupled, the connection part 322 may satisfy the conditional expression: 2.5≤G2/G1≤3-5. In the case of the conditional expression: G2/G1<2.5, the contact force between the contact portion 322-2 and the second conductive part 310 is weakened, and thus, the function of the contact portion 322-2, which strengthens the fixing force of the first conductive part 210 and the second conductive part 310, may be lost. On the other hand, in the case of the conditional expression: G2/G1 > 3.5, the length compared to the thickness may increase to cause a problem that the strength of the contact portion 322-2 is weaken, and thus, the contact portion 322-2 is easily damaged.

In addition, referring to FIG. 31, when a length from the frontmost surface of the connection part 322 to the rearmost surface is G5, and a length from the frontmost surface of the connection part 322 to the rearmost surface of the contact portion 322-2 is G4, the conditional expression: 2≤G5/G4≤2.5 may be satisfied. If the conditional expression: G5/G4 is less than 2, an area on which the bottom surface of the contact portion 322-2 supports the second conductive part 310 may become small, and the application of the principle of the lever to the connection portion 322-3 may be insufficient, resulting in deteriorating the function of the connection part 322. On the other hand, when the conditional expression: G5/G4 exceeds 2.5, the connection part 322 may occupy excessive space inside the connector module 300, or the connection portion 322-3 may be hooked with the contact portion 322-2, and thus, the spaced distance between the connection portion 322-3 and the second conductive part 310 may not be sufficiently secured to cause the problem that the connection function is deteriorated.

Lastly, referring to FIG. 31, in order that the connection portion 322-3 effectively moves downward to be coupled to the first connector housing 220 or release the coupling between the first connector housing 220, the rear bottom surface of the connection portion 322-3 may include an inclined surface 322-3a. Specifically, the inclined surface 322-3a may be disposed on the rear bottom surface of the connection portion 322-3 so that a distance between the connection portion 322-3 and the second conductive part 310 increases as moving toward the rearmost portion of the connection portion 322-3. For example, an angle θ at which the inclined surface 322-3a is inclined relative to an extension line of the front bottom surface of the connection portion 322-3 may be 5 degrees to 8 degrees. When the inclined angle θ of the inclined surface 322-3a is less than 5 degrees, the spaced distance between the rearmost bottom surface of the connection portion 322-3 and the second conductive part 310 may not be properly secured, and thus, the connection function of the connection portion 322 may be deteriorated. On the other hand, when the inclined angle θ of the inclined surface 322-3a is greater than 8 degrees, the thickness of the connection portion 322-3 may become excessively thin to cause the problem that the connection portion 322-3 is easily damaged and deformed due to the external impact.

In this case, in order that the connection part 322 is spaced apart from the second conductive part to perform the connection function more effectively, a spaced distance G6 between the rearmost portion of the connection part 322 and the second conductive part may be 0.7 mm to 0.8 mm. In order to increase in fixing force and contact force between the first conductive part 210 and the second conductive part 310, the coupling housing 400 may be configured to further fix the second conductive part 310 to the second connector housing 320 through the coupling structure. The coupling housing 400 may include a coupling body 410 and a coupling part 420.

The coupling part 420 may be connected to one side of the coupling body 410 and may be coupled to a side surface of the second connector housing 320. For example, the coupling part 420 may include a structure extending from each of both sides of the coupling body 410 to surround both sides of the second connector housing 320. That is, the coupling part 420 may be disposed along both sides of the frame 321 and coupled to both the sides of the frame 321.

The coupling part 420 may be coupled to the side surface of the frame 321 through the ring structure 421. Specifically, one side of the coupling part 420 may be connected to the coupling body 410, and the ring structure 421 may be disposed on the other end of the coupling part 420. The ring structure 421 of the coupling part 420 may be disposed along the side surface of the frame 321 and coupled to the lower side of the frame 321.

More specifically, the coupling part 420 may include an inclined surface that is inclined toward the side surface of the frame 321, and the side surface of the frame 321 may include an inclined surface corresponding to the inclined surface of the coupling part 420. The ring structure of the coupling part 420 may be hooked with the side surface of the frame 321 through a sliding method in which the inclined surface of the coupling part 420 moves along the inclined surface of the side surface of the frame 321. In other words, when the second conductive part 310 is inserted into the frame 321, the coupling housing 400 may be coupled in a direction perpendicular to the direction in which the second conductive part 310 is inserted, and the coupling housing 400 may be coupled to move along the inclined surface of the side surface of the inclined surface of the coupling part 420, and thus, the ring structure 421 of the coupling part 520 may be coupled to a lower side of the side surface of the frame 321.

As a result, the first conductive part 210 may be in contact with only a single surface of the second conductive part 310, and the first conductive part 210 and the second conductive part 310 may be strengthened in fixing force by the connection part 322 and the coupling housing 400 to reduce the overall height of the connector module 100, thereby allowing the connector module 100 to more effectively occupy space within the battery module. Specifically, the height H3 of the connector module 100 may be 3.5 mm to 4 mm. In other words, the height of the first connector 200 may be 3.5 mm to 4 mm.

### [Theme 8]

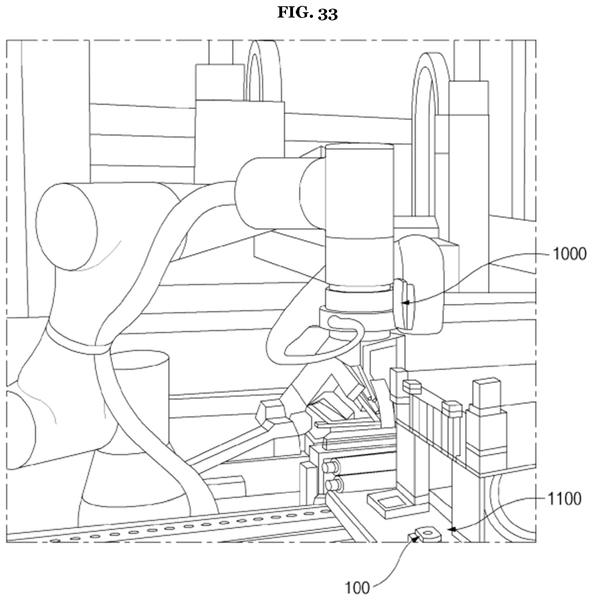

FIG. 33 is a schematic view illustrating a state in which vision inspection is performed on the connector module 100 using a vision inspection device 1000 according to an embodiment of the present invention. The description of the foregoing embodiments may be equally or similarly applied to this embodiment.

### <Vision inspection device 1000>

The vision inspection device 1000 may perform vision inspection on the connector module 100 transferred in a predetermined transfer direction through a transfer device 1100. For example, the vision inspection device 1000 may be installed at a predetermined position to perform the vision inspection above the connector module 100 transferred along the transfer direction. For a specific example, when the connector module 100 is transferred along the transfer direction by a conveyor belt, the vision inspection device 1000 may be installed above the conveyor belt to perform the vision inspection on an upper portion of the connector module 100. The above description is an example and is not limited thereto.

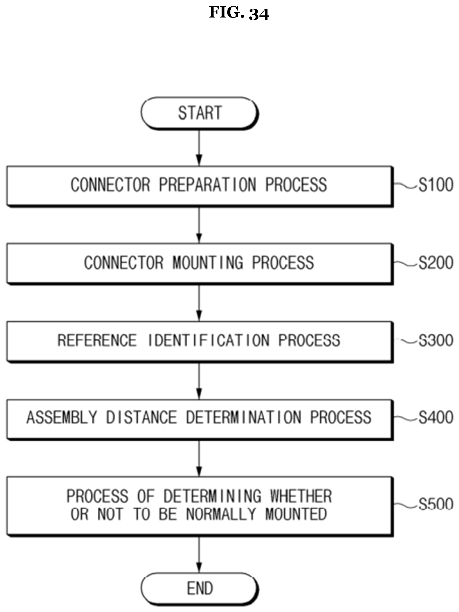

FIG. 34 is a flowchart illustrating a flow of performing the vision inspection according to an embodiment of the present invention. The description of the foregoing embodiments may be equally or similarly applied to this embodiment.

### <Connector inspection method>

According to operation S100, a connector inspection method may include a connector preparation process.

The connector preparation process may be a process of preparing a first connector 200 and a second connector 300 to be partially inserted into an accommodation space (or insertion space V) inside the first connector 200.

The connector preparation process may include a process of preparing the first connector 200. The process of preparing the first connector 200 may include a first conductive part 210 and be a process of preparing the first connector 200 provided in at least one hole 230 through which the accommodation space defined therein communicates with the outside.

The connector preparation process may include a process of preparing a second connector 300. The process of preparing the second connector 300 may be a process of preparing the second connector 300 that is inserted into the accommodation space (or insertion space V) through an opening 220-1 of the first connector 200, is provided with a second conductive part 310 electrically connected to the first conductive part 210, and includes a connection part 322 mounted and detachably coupled to the at least one hole 230.

According to operation S200, the connector inspection method may include a connector mounting process.

The connector mounting process may be a process of mounting the second connector 300 to the first connector 200.

The connector mounting process may include a hook mounting process. The hook mounting process may include a hook mounting process of hooking the connection part 322 on the at least one hole 230 so that the first conductive part 210 and the second conductive part 310 are matched.

According to operation S300, the connector inspection method may include a reference identification process.

The reference identification process may be performed in one direction of the first connector 200 and the second connector 300.

The reference identification process may include a process of identifying a first reference line.

The process of identifying the first reference line may be a process of identifying the first reference line that has a height difference compared to a surrounding area in the first connector 200 to serve as a standard for the vision inspection, through the vision inspection.

The reference identification process may include a process of identifying a second reference line.

The process of identifying the second reference line may be a process of identifying the second reference line for comparison with the first reference line in the second connector 300 through the vision inspection.

The reference identification process may include a process of performing the vision inspection in a direction that is transverse to the transfer direction during the transfer of the mounted first connector 200 and second connector 300.

According to operation S400, the connector inspection method may include an assembly distance determination process.

The assembly distance determination process may be a process of determining whether an assembly distance D from the first reference line to the second reference line is within a critical distance range. Critical distance range data, which serves as a standard for determining whether the distance is within the critical distance range, may be defined in advance.

The assembly distance determination process may include a process of comparing pre-stored critical distance range data with the identified assembly distance D.

According to operation S500, the connector inspection method may include a process of determining whether it is properly installed.

The process of determining whether the device is properly installed may be a process of determining that the device is properly installed when it is determined that the assembly distance D is within a predetermined distance range.

The connector inspection method may further include a notification provision process.

The notification provision process may be a process of providing notification to a user about normal or abnormal mounting through a user interface, after the process of determining whether the device is installed normally or abnormally.

According to the connector inspection method described above, it may be determined whether the connector is properly installed. Thus, during an automatic assembly (or installation) process of a connector or connector module, it is possible to quickly and error-freely determine whether it has been installed properly through the vision inspection.

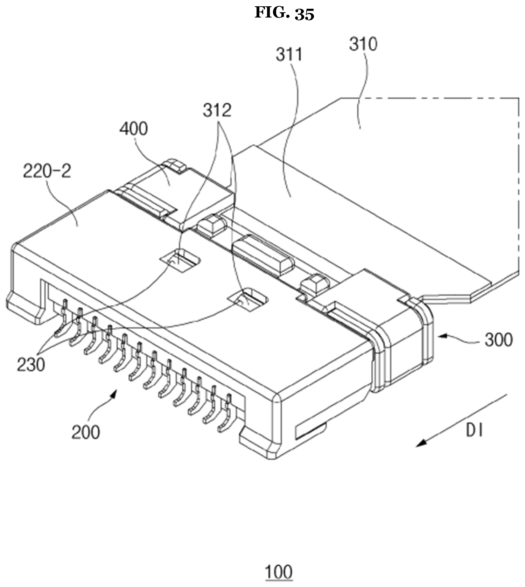

FIG. 35 is a perspective view of the connector module 100 that is subject to the vision inspection in a connector inspection method according to an embodiment of the present invention. The description of the foregoing embodiments may be equally or similarly applied to this embodiment.

The connector module 100 may include a first connector 200. The first connector 200 may be provided with a first conductive part 210 and at least one hole 230 that allow the internal accommodation space V (or insertion space) to communicate with the outside.

The first connector 200 may be provided with the first reference line. The first reference line may have a height difference compared to the surrounding area to serve as the standard for the vision inspection. For example, the first reference line may be an edge of the reference recess area 220-2-1 formed by recessing a portion of an outer edge of the first connector 200. For another example, it may be an edge of the first connector 200.

The connector module 100 may include a second connector 300. The second connector 300 may be provided with a second conductive part 310 inserted into the accommodation space V (or insertion space) through the opening 220-1 of the first connector 200 and electrically connected to the first conductive part 210. The second connector 300 may be attached to and detached from the first connector 200 by hooking the connection part 322 of the second connector 300 with at least one hole 230 of the first connector 200.

The second connector 300 may include a second reference line. The second reference line may be a line for comparison with the first reference line when performing the vision inspection.

Embodiments of the first reference line and the second reference line will be described later.

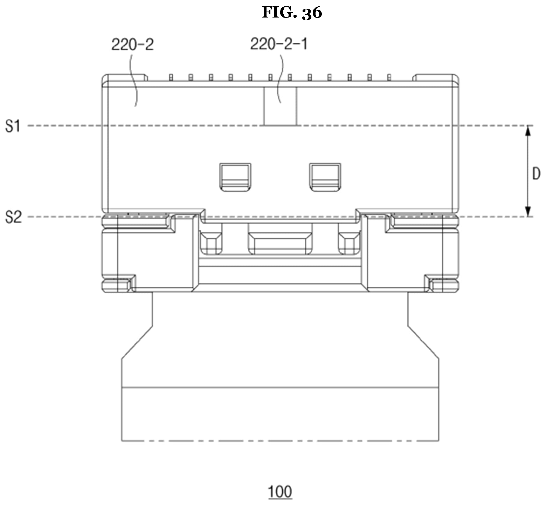

FIG. 36 is a plan view of the reference lines according to an embodiment of the present invention. The description of the foregoing embodiments may be equally or similarly applied to this embodiment.

A reference recess area 220-2-1 may be formed in the first connector 200. The reference recess area 220-2-1 may be formed by recessing a portion of an outer edge of the first connector 200 (or the first connector housing 200). The reference recess area 220-2-1 may be a rectangular recess area. The reference recess area 220-2-1 may be an area formed adjacent to the edge of the first connector 200 opposite to a side at which the second connector 300 is inserted.

The first reference line S1 may be a line parallel to an edge of the reference recess area 220-2-1 on which the second connector 300 is inserted.

The second reference line S2 may be an edge of the second connector 300 parallel to the first reference line S1. Specifically, it may be the edge of the second connector 300 that faces the edge of the first connector 200.

An assembly distance D may be a distance between the first reference line S1 and the second reference line S2.

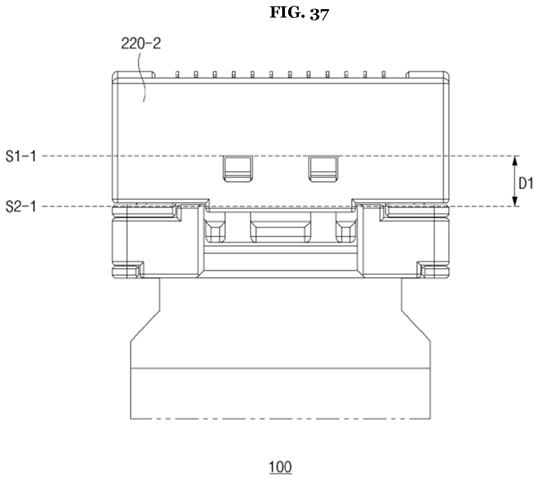

FIG. 37 is a plan view of the reference lines according to an embodiment of the present invention. The description of the foregoing embodiments may be equally or similarly applied to this embodiment.

A first reference line S1-1 may be an edge of at least one hole 230 opposite to the opening 220-1.

The second reference line S2-1 may be an edge of the second connector 300 parallel to the first reference line S1-1. Specifically, it may be the edge of the second connector 300 that faces the edge of the first connector 200.

An assembly distance D1 may be a distance between the first reference line S1-1 and the second reference line S2-1.

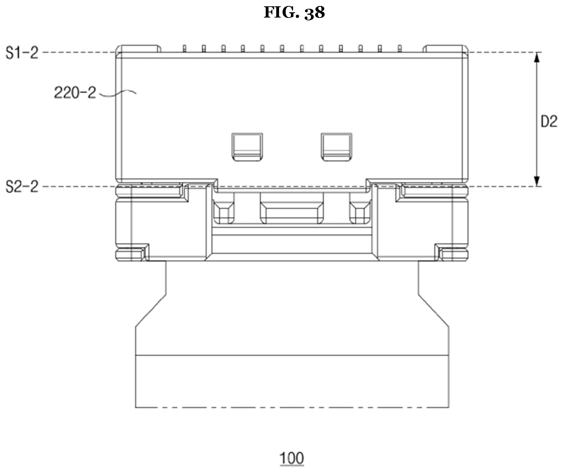

FIG. 38 is a plan view of the reference lines according to an embodiment of the present invention. The description of the foregoing embodiments may be equally or similarly applied to this embodiment.

A first reference line S1-2 may be an edge of the first connector 200 opposite to the side at which the second connector 300 is inserted.

The second reference line S2-2 may be an edge of the second connector 300 parallel to the first reference line S1-2. Specifically, it may be the edge of the second connector 300 that faces the edge of the first connector 200.

An assembly distance D2 may be a distance between the first reference line S1-2 and the second reference line S2-2.

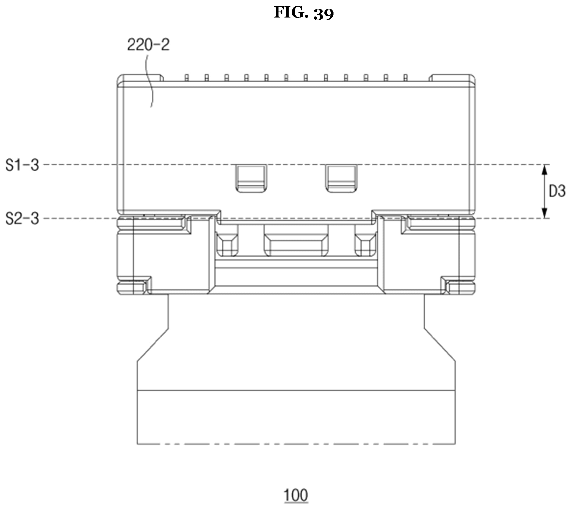

FIG. 39 is a plan view of the reference lines according to an embodiment of the present invention. The description of the foregoing embodiments may be equally or similarly applied to this embodiment.

A first reference line S1-3 may be an edge of at least one hole 230 opposite to the opening 220-1.

The second reference line S2-3 may be an edge of the second connector 300 parallel to the first reference line S1-3. Specifically, it may be the edge of the second connector 300 that faces the edge of the first connector 200.

An assembly distance D3 may be a distance between the first reference line S1-3 and the second reference line S2-3.

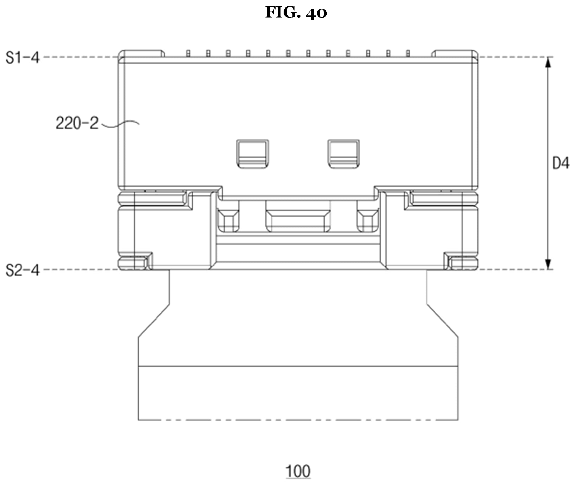

FIG. 40 is a plan view of the reference lines according to an embodiment of the present invention. The description of the foregoing embodiments may be equally or similarly applied to this embodiment.

A first reference line S1-4 may be an edge of at least one hole 230 opposite to the opening 220-1.

The second reference line S2-4 may be an edge of the second connector 300 parallel to the first reference line S1-4. Specifically, the second reference line S2-4 may be an edge of the second connector 300 opposite to the opening 220-1.

An assembly distance D4 may be a distance between the first reference line S1-4 and the second reference line S2-4.

The embodiments of the above-described first reference lines S1, S1-1, S1-2, S1-3, and S1-4 and the above-described second reference lines S2, S2-1, S2-2, S2-3, and S2-4 are illustrative, the first reference lines and the second reference lines for determining the assembly distances may be designed in various manners.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Battery module
2: Plurality of batteries
3: Case
3-1: Upper case
3-2: Side case
3-3: Lower case
10: Control unit
11: Control PCB
12: Control unit cover
12-1: Cover recess part
13: PCB frame
100: Connector module
200: First connector
210: First conductive part
220: First connector housing
220-1: Opening
220-2: Upper portion
220-3: Side portion
220-4: Lower portion
220-2-1: Reference recess area
220a: First recessed portion
220b: Second recessed portion
220c: Third recessed portion
221: Protrusion
222: Body part
223: Partition walls
224: Recessed line
225: Protrusion rib
226: Internal rib
230: Hole
300: Second connector
310: Second conductive part
311: Conductive film
312: First folding part
313: Second folding part
320: Second connector housing
321: Frame
321-1: First protrusion portion
321-2: Second protrusion portion
322: Connection part
322-1: Protrusion portion of connection part
322-2: Contact portion
322-3: Connection portion
340: Opening part
350: Combtooth structure
360: Combtooth base portion
400: Coupling housing
410: Coupling body
411: First coupling body
412: Second coupling body
410a: First surface of coupling body
410b: Second surface of coupling body
410c: Third surface of coupling body
420: Coupling part
430: Coupling pin
1000: Vision inspection device
1100: Transfer device
V: Insertion space
DI: Insertion direction
In view of the foregoing disclosure, the present invention may be implemented in accordance with the following itemized embodiment examples.
Item 1. A connector module comprising:
   a first connector comprising a first connector housing that is recessed therein to define a first recessed portion and a first conductive part coupled to the first connector housing; and
   a second connector coupled to the first connector,
   wherein the second connector comprises:
      a second connector housing of which at least a portion is inserted into and coupled to the first recessed portion;
      a second conductive part inserted into and coupled to the second connector housing so as to be electrically connected to the first conductive part; and a coupling housing configured to pass through the second connector housing and the second conductive part so as to couple the second connector housing to the second conductive part.
Item 2. The connector module of item 1, wherein the coupling housing comprises:
   a coupling body disposed at one side of the second connector housing; and
   a coupling pin protruding from the coupling body to pass through the second connector housing and the second conductive part.
Item 3. The connector module of item 2, wherein the second connector housing comprises a first coupling hole that is penetrated, and the second conductive part comprises a second coupling hole that is penetrated, and
   in a state in which the second conductive part is inserted and coupled to the second connector housing, the first coupling hole and the second coupling hole are defined in the same line.
Item 4. The connector module of item 3, wherein, in the state in which the second conductive part is inserted and coupled to the second connector housing, the coupling pin is disposed to integrally pass through the first coupling hole and the second coupling hole.
Item 5. The connector module of item 4, wherein the coupling pin is configured to prevent the second conductive part from being separated from the second connector housing.
Item 6. The connector module of item 5, wherein the coupling pin is configured to fix the second conductive part to the second connector housing so as to restrict movement of the second conductive part in a direction parallel to a direction in which the second conductive part is inserted into the second connector housing.
Item 7. The connector module of item 4, wherein a contact area between the first conductive part and the second conductive part is constantly maintained.
Item 8. The connector module of item 2, wherein the direction in which the second conductive part is inserted into the second connector housing and a direction in which the coupling pin passes are perpendicular to each other.
Item 9. The connector module of item 2, wherein the coupling housing further comprises a coupling part disposed to extend from each of both sides of the coupling body so as to be coupled to a side surface of the second connector housing.
Item 10. The connector module of item 9, wherein the coupling part is coupled to the side surface of the second connector housing through a ring structure.
Item 11. The connector module of item 10, wherein the coupling part comprises an inclined surface that is inclined toward the side surface of the second connector housing, and the side surface of the second connector housing comprises an inclined surface provided to correspond to the inclined surface of the coupling part, and the ring structure of the coupling part is hooked with the side surface of the second connector housing through a sliding manner in which the inclined surface of the coupling part moves along the inclined surface of the side surface of the second connector housing.
Item 12. The connector module of item 2, wherein the coupling body is configured to define a portion protruding toward the second conductive part so as to be in contact with the second conductive part, and the coupling pin is configured to protrude from the protruding portion of the coupling body.
Item 13. The connector module of item 2, wherein an end of the coupling pin has at least one or more of a curved shape or a horn shape.
Item 14. The connector module of item 1, wherein the direction in which the second conductive part is inserted into the second connector housing and a direction in which the coupling housing is coupled to the second connector housing are perpendicular to each other.
Item 15. A battery module comprising:
   a case configured to define an accommodation space therein;
   a plurality of battery cells accommodated in the accommodation space;
   a control unit configured to detect electrical signals of the plurality of battery cells so as to electrically control the plurality of battery cells; and the connector module of item 1, which is configured to electrically connect the plurality of battery cells to the control unit.
Item 16. The battery module of item 15, wherein the coupling housing comprises:
   a coupling body disposed at one side of the second connector housing; and
   a coupling pin protruding from the coupling body to pass through the second connector housing and the second conductive part.
Item 17. The battery module of item 16, wherein the coupling pin is configured to prevent the second conductive part from being separated from the second connector housing.

## Claims

1. A connector module comprising:
a first connector comprising a first connector housing and a first conductive part coupled to the first connector housing;
a second connector comprising a second connector housing of which at least a portion is coupled to the first connector housing; and
a coupling housing for coupling a second conductive part inserted into the second connector housing,
wherein the coupling housing is coupled to the second connector housing in a direction different from a direction in which the second conductive part is inserted into the second connector housing.

2. The connector module of claim 1, wherein the coupling housing comprises:
a coupling body disposed at one side of the second connector housing;
a coupling pin protruding from the coupling body to pass through the second conductive part inserted into the second connector housing; and
a coupling part disposed to extend from each of both sides of the coupling body so as to be coupled to a side surface of the second connector housing.

3. The connector module of claim 2, wherein the second connector housing comprises a first coupling hole that is penetrated, and the second conductive part comprises a second coupling hole that is penetrated, and
in a state in which the second conductive part is inserted and coupled to the second connector housing, the first coupling hole and the second coupling hole are defined in the same line.

4. The connector module of claim 3, wherein, in the state in which the second conductive part is inserted and coupled to the second connector housing, the coupling pin is disposed to integrally pass through the first coupling hole and the second coupling hole.

5. The connector module of claim 4, wherein the coupling pin is configured to prevent the second conductive part from being separated from the second connector housing.

6. The connector module of claim 5, wherein the coupling pin is configured to fix the second conductive part to the second connector housing so as to restrict movement of the second conductive part in a direction parallel to a direction in which the second conductive part is inserted into the second connector housing.

7. The connector module of claim 4, wherein a contact area between the first conductive part and the second conductive part is constantly maintained.

8. The connector module of claim 2, wherein the direction in which the second conductive part is inserted into the second connector housing and a direction in which the coupling pin passes are perpendicular to each other.

9. The connector module of claim 2, wherein the coupling part is coupled to the side surface of the second connector housing through a ring structure.

10. The connector module of claim 9, wherein the coupling part comprises an inclined surface that is inclined toward the side surface of the second connector housing, and the side surface of the second connector housing comprises an inclined surface provided to correspond to the inclined surface of the coupling part, and
the ring structure of the coupling part is hooked with the side surface of the second connector housing through a sliding manner in which the inclined surface of the coupling part moves along the inclined surface of the side surface of the second connector housing.

11. The connector module of claim 2, wherein the coupling body is configured to define a portion protruding toward the second conductive part so as to be in contact with the second conductive part, and
the coupling pin is configured to protrude from the protruding portion of the coupling body.

12. The connector module of claim 2, wherein an end of the coupling pin has at least one or more of a curved shape or a horn shape.

13. The connector module of claim 1, wherein the direction in which the second conductive part is inserted into the second connector housing and a direction in which the coupling housing is coupled to the second connector housing are perpendicular to each other.

14. A battery module comprising:
a plurality of battery cells;
a control unit; and
the connector module which is configured to electrically connect the plurality of battery cells to the control unit,
wherein the connector module comprises:
a first connector housing;
a second connector housing of which at least a portion is coupled to the first connector housing; and
a coupling housing for coupling a conductive part inserted into the second connector housing,
wherein the coupling housing is coupled to the second connector housing in a direction different from a direction in which the conductive part is inserted into the second connector housing.

15. The battery module of claim 14, wherein the coupling housing comprises:
a coupling body disposed at one side of the second connector housing; and
a coupling pin protruding from the coupling body to pass through the second connector housing and the second conductive part.
